# EUROPEAN PATENT APPLICATION

(11) **EP 4 761 396 A1**
(43) Date of publication of application: **17.06.2026**
(21) Application number: 24851078.6
(22) Date of filing: 08.08.2024
(51) Int. Cl.: H04W 64/00

(54) **MEASUREMENT METHOD AND APPARATUS, COMMUNICATION METHOD AND APPARATUS, TERMINAL DEVICE AND NETWORK DEVICE**

(30) Priority: 09.08.2023 CN 202311006104
(71) Applicant: Spreadtrum Semiconductor (Nanjing) Co., Ltd., Nanjing, Jiangsu 211899 (CN)
(72) Inventor: LEI, Zhenzhu, Nanjing, Jiangsu 211899 (CN)
(74) Representative: Patentanwälte Ruff, Wilhelm, Beier, Dauster & Partner mbB
(86) International application number: PCT/CN2024/110556
(87) International publication number: WO 2025/031433

(57) **Abstract**

The present application relates to the technical field of communications, and discloses a measurement method and apparatus, a communication method and apparatus, a terminal device and a network device. The method comprises: when a first valid duration ends and a terminal device can continue uplink transmission, performing GNSS measurement on the basis of a GNSS measurement start position, wherein the first valid duration represents a valid duration of first GNSS location information of the terminal device, and the GNSS measurement is used for determining second GNSS location information of the terminal device. Therefore, when a first valid duration ends and a terminal device can continue uplink transmission, because a terminal device cannot perform GNSS measurement and uplink transmission at the same time in an RRC connected state, the present application needs to determine a GNSS measurement start position, and then performs GNSS measurement on the basis of the GNSS measurement start position, so that GNSS measurement enhancement is realized.

## Description

The present invention claims priority to CN Patent Application No. 202311006104.9, entitled "MEASUREMENT METHOD AND APPARATUS, COMMUNICATION METHOD AND APPARATUS, TERMINAL DEVICE AND NETWORK DEVICE", filed on August 9, 2023, which is incorporated herein by reference in its entirety.

### TECHNICAL FIELD

The present application relates to the field of communication technology, and particularly to a measurement method and apparatus, a communication method and apparatus, a terminal device and a network device.

### BACKGROUND

The 3rd Generation Partnership Project (3GPP) organization introduces Global Navigation Satellite System (GNSS) measurements in the studies related to Non-Terrestrial Networks (NTN), in which the GNSS measurements may be used to determine the GNSS location information of a terminal device.

Current NTNs merely consider sporadic and short data transmission services, where GNSS measurements are only performed in the Radio Resource Control (RRC) Idle state. In contrast, if future NTNs are required to consider long-duration data transmission services, a terminal device may need to perform GNSS measurements in the RRC Connected state. Meanwhile, the terminal device in the RRC Connected state also needs to perform uplink transmission (such as uplink data transmission). However, given the complexity of the terminal device, the terminal device in the RRC Connected state is unable to perform both GNSS measurements and uplink transmission simultaneously. Thus, further research is required on how a terminal device in the RRC Connected state can perform GNSS measurements in order to achieve GNSS measurement enhancement.

### SUMMARY

The present application provides a measurement method and apparatus, a communication method and apparatus, a terminal device and a network device, to address the technical problem of how a terminal device in the RRC Connected state performs GNSS measurements in order to achieve GNSS measurement enhancement.

In a first aspect, the present application provides a measurement method, comprising:
performing global navigation satellite system GNSS measurements based on a GNSS measurement starting position in response to an expiration of a first validity duration and a determination that a terminal device is capable of continuing uplink transmission, the first validity duration representing a validity duration of first GNSS location information of the terminal device, and the GNSS measurements being used to determine second GNSS location information of the terminal device.

It can be seen that although the first validity duration expires, in some scenarios, the terminal device is still capable of continuing uplink transmission for a period of time. Therefore, if the first validity duration expires and the terminal device is capable of continuing uplink transmission, since the terminal device in the RRC Connected state is unable to perform both GNSS measurements and uplink transmission simultaneously, in the present application, the GNSS measurement starting position needs to be determined first, and then GNSS measurements are performed based on the GNSS measurement starting position to achieve GNSS measurement enhancement.

In a second aspect, the present application provides a communication method, comprising:
sending first information, the first information being used to configure a global navigation satellite system GNSS measurement starting position, the GNSS measurement starting position being used for performing GNSS measurements in response to an expiration of a first validity duration and a determination that a terminal device is capable of continuing uplink transmission, the first validity duration representing a validity duration of first GNSS location information of the terminal device, and the GNSS measurements being used for determining second GNSS location information of the terminal device.

It can be seen that although the first validity duration expires, in some scenarios, the terminal device is still capable of continuing uplink transmission for a period of time. Therefore, in the present application, the terminal device may be configured with the GNSS measurement starting position through the first information. Therefore, if the first validity duration expires and the terminal device is capable of continuing uplink transmission, since the terminal device in the RRC Connected state is unable to perform both NSS measurements and uplink transmission simultaneously, in the present application, the GNSS measurement starting position needs to be determined first, and then GNSS measurements are performed based on the GNSS measurement starting position to achieve GNSS measurement enhancement.

In a third aspect, the present application provides a measurement apparatus, wherein the apparatus comprises:
a measurement unit for performing global navigation satellite system GNSS measurements based on a GNSS measurement starting position in response to an expiration of a first validity duration and a determination that a terminal device is capable of continuing uplink transmission, the first validity duration representing a validity duration of first GNSS location information of the terminal device, and the GNSS measurements being used to determine second GNSS location information of the terminal device.

In a fourth aspect, the present application provides a communication apparatus, wherein the apparatus comprises:
a sending unit for sending first information, the first information being used to configure a global navigation satellite system GNSS measurement starting position, the GNSS measurement starting position being used for performing GNSS measurements in response to an expiration of a first validity duration and a determination that a terminal device is capable of continuing uplink transmission, the first validity duration representing a validity duration of first GNSS location information of the terminal device, and the GNSS measurements being used for determining second GNSS location information of the terminal device.

In a fifth aspect, the steps of the method designed in the first aspect described above are applied to a terminal device or in a terminal device.

In a sixth aspect, the steps of the method designed in the second aspect described above are applied to a network device or in a network device.

In a seventh aspect, the present application provides a terminal device, comprising: a processor, a memory, and computer programs or instructions stored on the memory, wherein the computer programs or instructions are executed by the processor to implement the steps of method designed in the first aspect described above.

In an eighth aspect, the present application provides a network device, comprising: a processor, a memory, and computer programs or instructions stored on the memory, wherein the computer programs or instructions are executed by the processor to implement the steps of method designed in the second aspect described above.

In a ninth aspect, the present application provides a chip comprising a processor, wherein the steps of the method designed in the first or second aspect described above are executed by the processor.

In a tenth aspect, the present application provides a chip module comprising a transceiver component and a chip, the chip comprising a processor, wherein the steps of the method designed in the first or second aspect described above are executed by the processor.

In an eleventh aspect, the present application provides a computer-readable storage medium, wherein the computer-readable storage medium stores computer programs or instructions that, when executed, implement the steps of the method designed in the first or second aspect described above.

In a twelfth aspect, the present application provides a computer program product comprising computer programs or instructions that, when executed, perform the steps of the method designed in the first or second aspect described above. For example, the computer program product may be a software installation package.

The beneficial effects brought by the technical solutions of the third, fifth, seventh, ninth to twelfth aspects may be referred to the technical effects brought by the technical solution of the first aspect, which will not be repeated here.

The beneficial effects brought by the technical solutions of the second, fourth, sixth, eighth to twelfth aspects may be referred to the technical effects brought by the technical solution of the second aspect, which will not be repeated here.

### BRIEF DESCRIPTION OF THE DRAWINGS

FIG. 1 is a schematic architectural diagram of a communication system according to an embodiment of the present application;
FIG. 2 is a schematic architectural diagram of a communication system with a transparent satellite according to an embodiment of the present application;
FIG. 3 is a schematic diagram of beams generated by a satellite on the ground according to an embodiment of the present application;
FIG. 4 is a schematic diagram comparing signal reception quality between a terrestrial network communication system and an NTN communication system according to an embodiment of the present application;
FIG. 5 is a schematic diagram comparing architectures of NTN communication systems according to an embodiment of the present application;
FIG. 6 is a schematic flowchart of uplink data transmission in an NTN communication system according to an embodiment of the present application;
FIG. 7 is a timing diagram of an ending position of a GNSS validity duration and a GNSS measurement starting position according to an embodiment of the present application;
FIG. 8 is a timing diagram of an ending position of a GNSS validity duration and a GNSS measurement starting position according to an embodiment of the present application;
FIG. 9 is a timing diagram of an ending position of a first validity duration and a GNSS measurement starting position according to an embodiment of the present application;
FIG. 10 is a timing diagram of an ending position of a duration during which a terminal device is capable of continuing uplink transmission and a GNSS measurement starting position according to an embodiment of the present application;
FIG. 11 is a timing diagram of a timeout position of an uplink timing alignment timer and a GNSS measurement starting position according to an embodiment of the present application;
FIG. 12 is a timing diagram of an ending position of a first validity duration and a GNSS measurement starting position according to an embodiment of the present application;
FIG. 13 is a schematic flowchart of a measurement method according to an embodiment of the present application;
FIG. 14 is a schematic flowchart of a communication method according to an embodiment of the present application;
FIG. 15 is a block diagram of a measurement apparatus comprising functional units according to an embodiment of the present application;
FIG. 16 is a block diagram of a communication apparatus comprising functional units according to an embodiment of the present application;
FIG. 17 is a schematic structural diagram of a terminal device according to an embodiment of the present application;
FIG. 18 is a schematic structural diagram of a network device according to an embodiment of the present application.

### DETAILED DESCRIPTION

It should be understood that the terms "first", "second", etc. mentioned in the embodiments of the present application are used to distinguish different objects, rather than to describe a specific order. In addition, the terms "comprising" and "having", as well as any variations thereof, are intended to cover nonexclusive inclusions. For example, a process, method, software, product, or device that includes a series of steps or units is not limited to the listed steps or units, but may also include steps or units that are not listed, or may also include other steps or units inherent to the process, method, product, or device.

The term "an embodiment" referred to in the present application means that specific features, structures, or characteristics described in conjunction with an embodiment may be included in at least one embodiment of the present application. This phrase appearing in various parts of the Description does not necessarily refer to a same embodiment, nor is it an independent or alternative embodiment that is mutually exclusive with other embodiments. Those skilled in the art can explicitly or implicitly understand that the embodiments described herein may be combined with other embodiments.

In embodiments of the present application, "at least one" refers to one or more, and "a plurality of" refers to two or more.

The term "and/or" in embodiments of the present application describes a relationship between related objects, indicating that three relationships may exist. For example, A and/or B may indicate: A alone, both A and B, or B alone. A and B may be in forms of singular or plural. The character "/" indicates an "or" relation between the two objects before and after the character.

The term "at least one of" or similar terms in an embodiment of the present application refers to any combination of items, including a single item or any combination of a plurality of items. For example, at least one of a, b, or c may indicate the following seven cases: a, b, c, a and b, a and c, b and c, and a, b, and c. Each of a, b, and c may be an element or a set containing one or more elements.

In the embodiments of the present application, the terms "of", "corresponding", "relevant", "related" "associated", and "mapped" may sometimes be used interchangeably. It should be pointed out that when the distinction is not emphasized, the concept or meaning to be expressed is consistent.

The term "network" in the embodiments of the present application may be expressed as the same concept as "system", and the communication system is referred to as the communication network.

The term "connection" as used in the embodiments of the present application refers to various forms of connection which enables communication between devices, such as direct connection or indirect connection, which is not limited specifically herein.

A specific introduction to the relevant content involved in the technical solution of the embodiments of the present application is as follows.

### I. Communication System, Terminal Device, Satellite, Non-Terrestrial Network Gateway, and Network Device

### 1. Communication System

The technical solutions of the embodiments of the present application may be applicable to various wireless communication systems, such as Long Term Evolution (LTE) system, Advanced Long Term Evolution (LTE-A) system, New Radio (NR) system, the evolution system of NR system, LTE based Access to Unlicensed Spectrum (LTE-U) system, NR based Access to Unlicensed Spectrum (NR-U) system, Non-Terrestrial Networks (NTN) system, Universal Mobile Telecommunications System (UMTS), Wireless Local Area Network (WLAN), Wireless Fidelity (Wi-Fi), 6^{th}-Generation (6G) communication system or other communication systems.

It should be noted that traditional communication systems support a limited number of connections and are easy to implement. With the development of communication technology, the communication system of the present application not only supports traditional communication systems, but also supports device to device (D2D) communication, machine to machine (M2M) communication, machine type communication (MTC), vehicle to vehicle (V2V) communication, vehicle to everything (V2X) communication, narrowband internet of things (NB-loT) communication, etc. Therefore, the technical solutions of the embodiments of the present application are also applicable to the above-mentioned communication systems.

For example, the embodiments of the present application are applicable to scenarios such as beamforming, carrier aggregation (CA), dual connectivity (DC), or standalone (SA) deployment, etc.

As another example, the embodiments of the present application are applicable to scenarios such as communication on unlicensed spectrum. In the embodiments of the present application, unlicensed spectrum may be considered as shared spectrum. Alternatively, the embodiments of the present application are applicable to licensed spectrum. Here, the licensed spectrum may be considered as non-shared spectrum.

Optionally, the technical solutions of the embodiments of the present application are applicable to NTN communication systems, e.g., satellite communication systems. For satellite communication systems, network devices usually communicate with terminal devices on the ground through satellites.

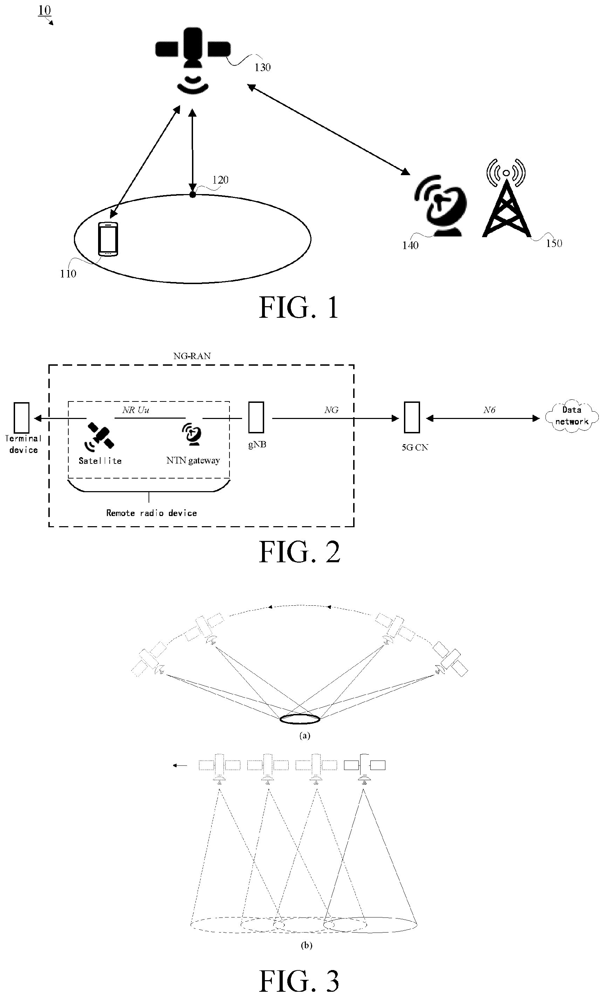

An exemplary NTN communication system of an embodiment of the present application is shown in FIG. 1. The NTN communication system 10 may include a terminal device 110, a satellite 130, a non-terrestrial network gateway (NTN gateway) 140, and a network device 150. The terminal device 110, the non-terrestrial network gateway 140, and the network device 150 may be located on the surface of the Earth, while the satellite 130 is located in an Earth orbit. The satellite 130 may provide communication services to a geographic area covered by signals of the satellite 130, and may communicate with a terminal device 110 located within the signal coverage area.

The terminal device 110 is located within the coverage area of a certain beam or within a certain cell, and the coverage area of the beam or the cell includes a reference point 120. In addition, the communication link between the terminal device 110 and the satellite 130 is called a service link. The communication link between the satellite 130 and the non-terrestrial network gateway 140 is called a feeder link.

It should be noted that the non-terrestrial network gateway 140 and the network device 150 may be integrated into one device, or they may be separate devices, which is not limited specifically herein.

### 2. Terminal Device

A terminal device may be a device with transceiver functionality, and may also be referred to as a terminal, a user equipment (UE), a remote user equipment (remote UE), a relay device (relay UE), an access terminal device, a user unit, a user station, a mobile station, a mobile platform, a remote station, a mobile device, a user terminal device, a smart terminal device, a wireless communication device, a user agent, or a user device. It should be noted that, the relay device is a terminal device capable of providing relay forwarding services for other terminal devices (including remote terminal devices).

For example, the terminal device may be a mobile phone, a tablet computer (pad), a computer with wireless transceiver functionality, a virtual reality (VR) terminal device, an augmented reality (AR) terminal device, a wireless terminal device in industrial control, a wireless terminal device in unmanned autonomous driving, a wireless terminal device in remote medical care, a wireless terminal device in a smart grid, a wireless terminal device in transportation safety, a wireless terminal device in a smart city, or a wireless terminal device in a smart home, etc.

As another example, the terminal device may also be a cellular phone, a cordless phone, a session initiation protocol (SIP) phone, a wireless local loop (WLL) station, a personal digital assistant (PDA), a handheld device with wireless communication functionality, a computing device or another processing device connected to a wireless modem, an in-vehicle device, a wearable device, a terminal device in a next-generation communication system (e.g., an NR communication system, a 6G communication system), or a terminal device in a future evolved Public Land Mobile Network (PLMN), etc., which is not limited specifically herein.

Optionally, the terminal device may be deployed on land, including indoor or outdoor, handheld, wearable, or vehicle-mounted; it may be deployed on water (e.g., ships, etc.); or it may be deployed in the air (e.g., aircraft, balloon, and satellite, etc.).

Optionally, the terminal device may include an apparatus with wireless communication functionality, e.g. a chip system, a chip, or a chip module. For example, the chip system may include a chip and may also include other discrete devices.

Optionally, the terminal device described in the embodiments of the present application may be a chip, a chip module, an apparatus, a unit, etc., which is not limited specifically herein.

### 3. Satellite

A satellite may be a spacecraft carrying a transparent payload (also known as a bent pipe payload) or a regenerative payload signal transmitter, also known as a transparent satellite or a regenerative satellite.

It should be noted that a satellite may be classified as a low earth orbit (LEO) satellite, a medium earth orbit (MEO) satellite, a geostationary earth orbit (GEO) satellite, or a high elliptical orbit (HEO) satellite according to its orbital altitude. For example, the orbit altitude of a LEO satellite is between 300km and 1700km, the orbit altitude of a MEO satellite is between 7000km and 25000km, the orbital altitude of a GEO satellite is 35786km, and the orbital altitude of an HEO satellite is between 400km and 50000km.

### 4. Non-Terrestrial Network Gateway

A non-terrestrial network gateway may be an earth station or gateway located on the ground, capable of providing sufficient radio frequency (RF) power and RF sensitivity to enable the connection between ground devices (such as network devices) and satellites. A non-terrestrial network gateway is a node in the transport network layer (TNL).

### 5. Network Device

A network device may be a device with transceiver functionality, which may be used to communicate with terminal devices.

Optionally, the network device may be responsible for radio resource management (RRM), quality of service (QoS) management, compression and encryption of data, and transmission and reception of data, etc. on the air interface.

Optionally, the network device may include a Base Station (BS) in a communication system or a device deployed in a Radio Access Network (RAN) for providing wireless communication functionality, i.e., the network device may include a device in the RAN.

For example, the device in the RAN may include an evolved node B (eNB or eNodeB) in an LTE communication system, a next generation evolved node B (ng-eNB) in an NR communication system, a next generation node B (gNB) in an NR communication system, a master node (MN) in a dual-connectivity architecture, a second node or secondary node (SN) in a dual-connectivity architecture, etc., which is not limited specifically herein.

Optionally, the network device may include a device in the core network (CN).

For example, devices in CN may include access and mobility management function (AMF), user plane function (UPF), session management function (SMF), and so on.

Optionally, the network device may also be an access point (AP) in a WLAN, a relay station, a communication device in a future evolved PLMN network, or a communication device in an NTN network, etc.

Optionally, the network device may include an apparatus with functionality of providing wireless communication to terminal devices, e.g. a chip system, a chip, or a chip module. For example, the chip system may include a chip or may include other discrete devices.

Optionally, the network device may be a transmission and reception point (TRP).

Optionally, the network device may communicate with Internet Protocol (IP) networks, such as the Internet, a private IP network, or other data networks, etc. Optionally, the network device may include an independent node to implement the functionalities of the aforementioned base station, or may include two or more independent nodes to implement the functionalities of the aforementioned base station. For example, the network device includes a centralized unit (CU) and a distributed unit (DU), such as a gNB-CU and a gNB-DU. Furthermore, in other embodiments of the present application, the network device may also include an active antenna unit (AAU). The CU implements a part of the functionalities of the network device, and the DU implements the other part of the functionalities of the network device. For example, the CU is responsible for processing non-real time protocols and services, and implementing the functionalities of the radio resource control (RRC) layer, the service data adaptation protocol (SDAP) layer, and the packet data convergence protocol (PDCP) layer. The DU is responsible for processing physical layer protocols and real-time services, and implementing the functionalities of the radio link control (RLC) layer, the medium access control (MAC) layer, and the physical (PHY) layer. Additionally, the AAU may implement some physical layer processing functionalities, and functionalities related to radio frequency processing and active antennas. Since information at the RRC layer eventually becomes information at the PHY layer, or is transformed from information at the PHY layer, in such network deployment, a higher-layer signaling (such as RRC signaling) may be considered as being generated by the CU and sent by the DU, or sent by the DU and AAU cooperatively. It may be understood that the network device may include at least one of the CU, DU, and AAU. Additionally, the CU may be classified as a RAN device, or may also be classified as a core network device, which is not limited specifically herein.

Optionally, the network device may be any one of multiple stations performing coherent joint transmission (CJT) with a terminal device, or another station other than the multiple stations, or another network device communicating with the terminal device over the network, which is not limited specifically herein. The coherent joint transmission by multiple stations may be joint coherent transmission of multiple stations, or different data belonging to a same physical downlink shared channel (PDSCH) may be sent from different stations to a terminal device, or multiple stations may be virtualized into one station for transmission, or other forms of cooperative transmission. Stations in multi-station coherent joint transmission may be remote radio heads (RRHs), transmission and reception points (TRPs), or network devices, etc., which are not limited specifically herein.

Optionally, the network device may be any one of multiple stations performing non-coherent joint transmission with a terminal device, or another station other than the multiple stations, or another network device communicating with the terminal device over the network, which is not limited specifically herein. Multi-station non-coherent joint transmission may be a joint non-coherent transmission of multiple stations, or different data belonging to a same PDSCH may be sent from different stations to a terminal device, or different data belonging to a same PDSCH may be sent from different stations to a terminal device, or other forms of non-cooperative transmission. Stations in multi-station non-coherent joint transmission may be RRHs, TRPs, network devices, etc., which are not limited specifically herein.

Optionally, the network device may provide services for a cell, and terminal devices in the cell may communicate with the network device over transmission resources (e.g., spectrum resources). The cell may be a macro cell, a small cell, a metro cell, a micro cell, a pico cell, or a femto cell, etc.

Optionally, the network device described in the embodiments of the present application may be a chip, a chip module, an apparatus, a unit, etc., which is not limited specifically herein.

### 6. Exemplary Explanation

By way of example, a transparent satellite communication system is used as an example to illustrate the solution of the present application in the embodiments of the present application. The transparent satellite communication system uses transparent payloads. The schematic diagram of the architecture of the transparent satellite communication system is shown in FIG. 2, in which the terminal device, the non-terrestrial network gateway, and the gNB are located on the surface of the Earth, while the satellite is in an Earth orbit. The satellite, the non-terrestrial network gateway, and the gNB form a radio access network (NG-RAN). The NG-RAN connects to the 5G core network through an NG interface. The satellite and the non-terrestrial network gateway may be considered as remote radio devices, and the satellite and the non-terrestrial network gateway may communicate through an NR Uu interface.

### II. NTN Communication System

### 1. NTN Communication System and Terrestrial Network Communication System

In an NTN communication system, a satellite typically generates one or more beams (or beam footprints) within a given service area, wherein the shape of the beams is usually elliptical, as described in the 3GPP standard. The beams generated by some satellites (such as LEO satellites) will also move with the movement of the satellites in fixed orbits; alternatively, the beams generated by some satellites (such as LEO or GEO satellites) on the ground do not move with the movement of the satellites in fixed orbits.

An example is shown in FIG. 3. In FIG. 3, at (a), the beam generated by a satellite (such as a LEO satellite or GEO satellite) does not move with the movement of the satellite in a fixed orbit. In FIG. 3 at (b), the beam generated by the satellite will move along with the movement of the satellite in a fixed orbit. Furthermore, if the relative distance between the satellite and the beam generated by the satellite is fixed, the change in path loss is relatively small.

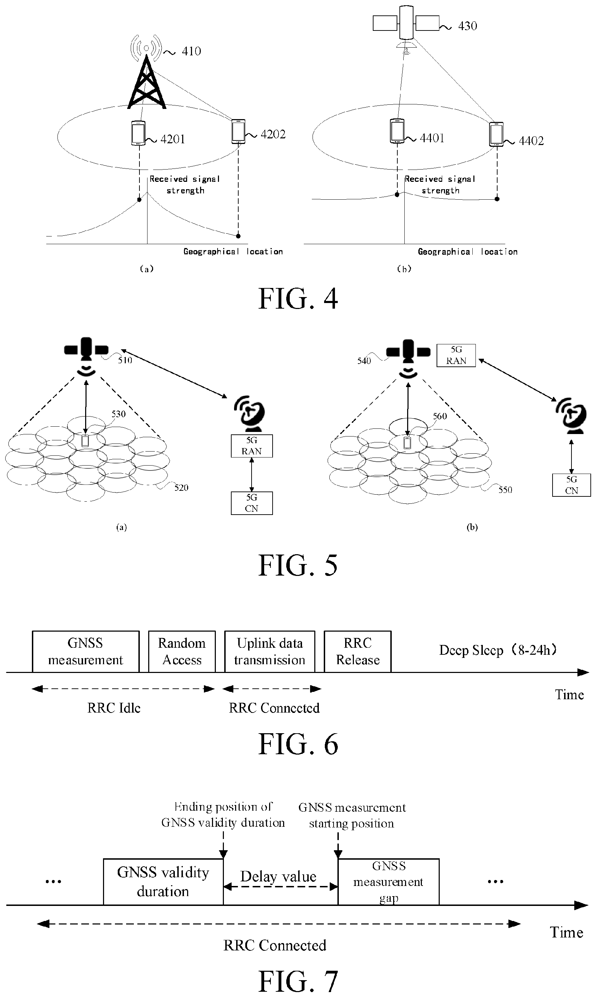

Due to the very long distance of the satellite from the ground (for example, for a GEO satellite, it is 35786 km), within a coverage area of a same beam or within a same cell, the difference in propagation distances between terminal devices (such as UEs) at different geographical locations and the satellite is small (i.e. the difference in path losses of signals corresponding to terminal devices at different geographical locations within a coverage area of the same beam or within the same cell is small), resulting in a very small difference in received signal quality (including downlink received signal quality of terminal devices) corresponding to terminal devices at different geographical locations within the coverage area of the same beam or within the same cell, as shown in FIG. 4 at (b).

In the terrestrial network communication system shown in FIG. 4 at (a), there are terminal devices 4201 and 4202 at different geographical locations within the coverage area of a same beam/a cell.

Due to the significant difference in the distance from the network device 410 to the terminal device 4201, and the distance from the network device 410 to the terminal device 4202, there is a significant difference between the received signal quality corresponding to the terminal device 4201 and the received signal quality corresponding to the terminal device 4202. In the NTN communication system shown in FIG. 4 at (b), there are terminal devices 4401 and 4402 at different geographical locations within the coverage area of the same beam/cell.

Due to the very long distance from the satellite 430 to the ground, there is a small difference in the distance from the satellite 430 to the terminal device 4401 and the distance from the satellite 430 to the terminal device 4402, resulting in a small difference between the received signal quality corresponding to the terminal device 4401 and the received signal quality corresponding to the terminal device 4402.

### 2. Architecture of NTN Communication System

The architecture of the NTN communication system in embodiments of the present application mainly includes an NTN communication architecture with transparent satellites (i.e. using transparent payloads) or an NTN communication architecture with regenerative satellites (i.e. using regenerative payloads), as shown in FIG. 5. FIG. 5 at (a) illustrates the NTN communication architecture with transparent satellites, while FIG. 5 at (b) illustrates the NTN communication architecture with regenerative satellites.

In FIG. 5 at (a), the satellite 510 in a transparent forwarding mode generates at least one beam 520, which may form a cell. At this point, the terminal device 530 located in the cell may measure the beams in the cell and select a beam based on the beam measurement results, ultimately establishing a communication connection with the satellite 510 through the selected beam.

In FIG. 5 at (b), the satellite 540 in a regenerative signal mode generates at least one beam 550, which may form a cell. At this point, the terminal device 560 located in the cell may measure the beams in the cell and select a beam based on the beam measurement results, ultimately establishing a communication connection with the satellite 540 through the selected beam.

### 3. GNSS Measurement

In the NTN communication system, the terminal device obtaining GNSS location information is a prerequisite for data transmission or uplink time advance synchronization. In the case where the terminal device has GNSS capability, in order to obtain the GNSS location information, the terminal device needs to perform GNSS measurements. Since terminal devices have a relatively high requirement for battery life and typically only store a small amount of power/energy, the terminal devices shall not perform frequent GNSS measurements, to avoid shortening battery life and reducing energy consumption.

It should be noted that the GNSS location information used in the present application may be understood as location information of a terminal device (such as UE location information), GNSS positioning information, etc., and such information may be determined based on GNSS.

Since the current NTNs merely consider sporadic and short data transmission services, terminal devices do not need to be in the RRC Connected state for a long duration. Therefore, the terminal devices only need to complete GNSS measurements before entering the RRC Connected state, and do not need to perform GNSS measurements after entering the RRC Connected state. If the GNSS location information becomes outdated during the RRC Connected state, the terminal device needs to exit the RRC Connected state and enter the RRC Idle state to re-determine new GNSS location information.

In order to ensure the accuracy of GNSS location information during data transmission or in the RRC connection state, a validity duration for GNSS location information (abbreviated as "GNSS validity duration") is defined. In this way, during the GNSS validity duration, the terminal device and the network consider the GNSS location information as valid and accurate. In addition, the terminal device may report the GNSS validity duration to the network. The value range of the GNSS validity duration may be {10s, 20s, 30s, 40s, 50s, 60s, 5min, 10min, 15min, 20min, 25min, 30min, 60min, 90min, 120min, infinity}.

In the NTN communication system, considering the complexity of the terminal device, it is not possible for the terminal device in the RRC Connected state to perform both GNSS measurements and uplink transmission, which means that GNSS measurements and uplink transmission need to be time-divided.

For example, taking uplink transmission being uplink data transmission as an example, FIG. 6 shows a basic process of uplink data transmission in the NTN communication system, where GNSS measurements and uplink data transmission need to be separated in time.

### 4. Uplink Timing Synchronization Mechanism in NTN

In the current NTN communication system, it is assumed that the terminal device has GNSS positioning capability. In this way, the terminal device may calculate the Round Trip Time (RTT) between its current position and the satellite based on ephemeris information and GNSS location information. Based on this, in the current NTN communication system, the Timing Advance (TA) value sent by the terminal device in uplink is determined by the following parameters:
- a TA value on terminal device level calculated by the terminal device based on GNSS location information and ephemeris information, which is the RTT between the terminal device and the satellite; a common TA value broadcast by the network, which is the RTT between the satellite and the reference point; a TA adjustment value indicated in message 2 (Msg2), message B (MsgB), or MAC CE by the network during the random access process, (the TA value does not include this parameter if PRACH is sent);
- a fixed offset indicated by the network: N_{TA}, _{offset}.

### III. Enhancement Process of GNSS Measurement

### 1. Description

Current NTNs merely consider sporadic and short data transmission services, where GNSS measurements are only performed in the RRC Idle state. In contrast, if future NTNs are required to consider long-duration data transmission services, a terminal device may need to perform GNSS measurements in the RRC Connected state. Meanwhile, the terminal device in RRC Connected state also needs to perform uplink transmission (such as uplink data transmission). However, considering the complexity of the terminal device, it is not possible for the terminal device to perform both GNSS measurements and uplink transmission simultaneously, which means that GNSS measurements and uplink transmission need to be time divided.

Based on this, in the enhancement process of GNSS measurements, in order to ensure that the terminal device is able to perform GNSS measurements in the RRC Connected state, the network may configure a GNSS measurement period or GNSS measurement gap. During the GNSS measurement period, the terminal device is able to perform GNSS measurements. There are two approaches for GNSS measurements:

### Approach 1: Network triggers GNSS measurements

In "Approach 1", the network device may send a certain signaling (such as MAC CE, RRC signaling, DCI, MAC signaling, etc.) within the GNSS validity duration. This signaling is used to trigger the terminal device to perform GNSS measurements, and then the terminal device determines a starting position of the GNSS measurement gap based on the receiving position of the signaling. Meanwhile, the network device will also configure a length of the GNSS measurement gap. In this way, the starting position and length of the GNSS measurement gap may be used to determine an ending position of the GNSS measurement gap.

For ease of description, in the present application, "the starting position of the GNSS measurement gap" is referred to as "the GNSS measurement starting position". In addition, in "Approach 1", the network device may also send a certain signaling (such as MAC CE, RRC signaling, DCI, MAC signaling, etc.) within the GNSS validity duration. This signaling is used to trigger the terminal device to perform GNSS measurements and directly indicates the GNSS measurement starting position.

Therefore, the GNSS measurement starting position may be determined by the terminal device or directly indicated by the network.

### Approach 2: Terminal device autonomously performs GNSS measurements

In "Approach 2", when the GNSS validity duration expires (also known as "timeout") and the terminal device does not receive a trigger signaling from the network, the terminal device may determine the GNSS measurement starting position based on an ending position of the GNSS validity duration (also known as "timeout position of GNSS validity duration") and a delay value (also known as "offset") configured by the network, in order to perform GNSS measurements based on the GNSS measurement starting position, achieving autonomous GNSS measurements.

The delay value may represent a time interval between the ending position of the GNSS validity duration and the GNSS measurement starting position. Furthermore, the network may configure the length of the GNSS measurement gap, as shown in FIG. 7. In FIG.7, the time interval between the ending position of the GNSS validity duration and the GNSS measurement starting position is the delay value.

### Continuing uplink transmission

In "Approach 2", although the GNSS validity duration expires, in some scenarios, the terminal device is still capable of continuing uplink transmission for a period of time, such as time period X. For example, although the GNSS validity duration expires, the uplink time-frequency error of the terminal device may still meet the requirement of the uplink transmission.

For ease of description, in the present application, "the period of time during which the terminal device is capable of continuing uplink transmission" may be referred to as "the duration during which the terminal device is capable of continuing uplink transmission".

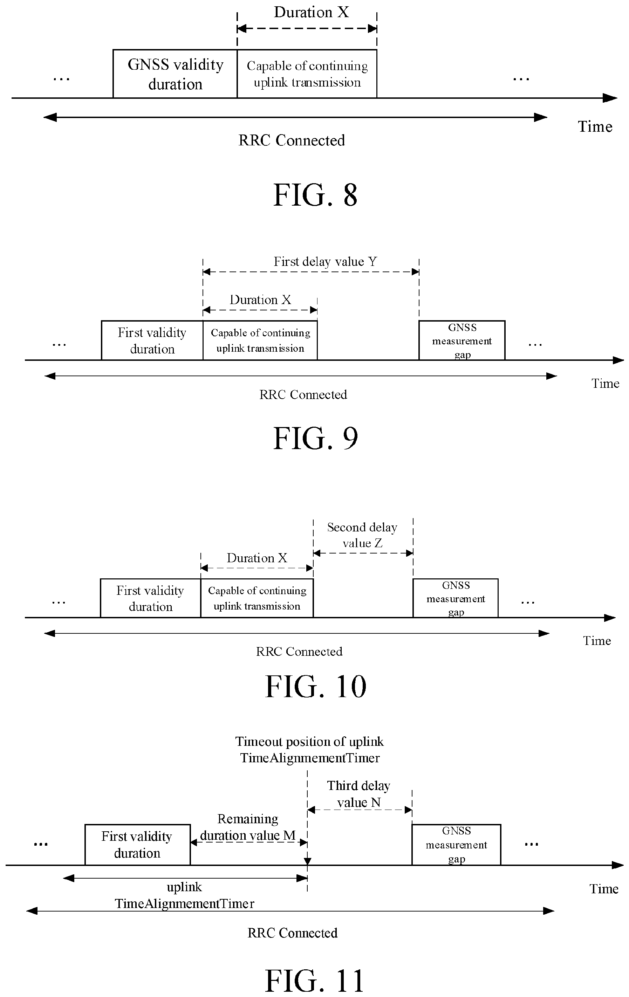

For example, as shown in FIG. 8, since the uplink time-frequency error of the terminal device can still meet the requirement of the uplink transmission, when the GNSS validity duration expires, the value of the duration during which the terminal device is capable of continuing uplink transmission is X.

In addition, whether the terminal device is capable of continuing uplink transmission after the GNSS validity duration expires may be determined through the following two approaches.
◆ The first approach: based on the uplink timing alignment timer (timeAlignTimer, TAC)

In the 'first approach', the network will configure a Timing Advance Group (TAG) for each serving cell of the terminal device, where each serving cell will only belong to one TAG. In addition, in the maintenance of uplink time alignment, the network will configure that one TAG is associated with one TA value and/or with one TAC timer, so that each serving cell in the TAG will be associated with one TAC timer. The TAC timer may be used to control the terminal device considers how long the serving cell in the TAG associated with the TAC timer to be uplink time aligned. That is, the TAC timer is associated with the TAG. If the GNSS validity duration expires but the TAC timer is not timeout, the terminal device is capable of continuing uplink transmission.
◆ The second approach: The network indicates whether the terminal device is capable of continuing uplink transmission.In the 'second approach', the network may indicate, through signaling (such as MAC CE, DCI, RRC signaling, UE specific signaling, MAC signaling, etc.), whether the terminal device is capable of continuing uplink transmission or not after the GNSS validity duration expires, and configure the duration during which the uplink transmission may continue. In summary, in "Approach 1" of the present application, the GNSS starting position may be determined based on the receiving position of the trigger signaling sent by the network, in order to perform GNSS measurements. In Approach 2 of the present application, the GNSS measurement starting position may be determined based on the ending position of the GNSS validity duration and the delay value configured by the network, in order to perform GNSS measurements.

In addition, in "Approach 2", in the scenario where the GNSS validity duration expires and the terminal device is capable of continuing uplink transmission, since the terminal device in the RRC Connected state is unable to perform both GNSS measurements and uplink transmission simultaneously, in the present application, the GNSS measurement starting position needs to be determined first. The GNSS measurement starting position needs to be time-divided from the uplink transmission to be continued by the terminal device. Then, GNSS measurements are performed based on the GNSS measurement starting position, ensuring that uplink transmission and GNSS measurements are separated in time, achieving GNSS measurement enhancement. First GNSS Location Information, Second GNSS Location Information, First Validity Duration

It should be noted that since the GNSS validity duration may represent the validity duration of the existing GNSS location information of the terminal device, when the GNSS validity duration expires (also known as timeout of the GNSS validity duration), it indicates that the existing GNSS location information is outdated, invalid, or inaccurate. Then, the terminal device needs to perform GNSS measurements to determine new GNSS location information.

For ease of distinction and description, in the present application, "the existing GNSS location information" may be referred to as "the first GNSS location information", and "the new GNSS location information" may be referred to as "the second GNSS location information". That is, the GNSS validity duration may represent the first GNSS location information of the terminal device, and GNSS measurements are used to determine the second GNSS location information of the terminal device.

In addition, for ease of description, in the present application, "the GNSS validity duration" may be referred to as "the first validity duration", that is, the first validity duration may represent the validity duration of the first GNSS location information of the terminal device. Of course, it may also be described by other terms.

### 2. Specific Implementations

In "Approach 2", for the scenario where the GNSS validity duration expires and the terminal device is capable of continuing uplink transmission, in order to determine the GNSS measurement starting position, the present application may provide four embodiments below for illustration. Of course, the content of these embodiments may be interrelated, parallel, or independent, and new embodiments may be formed based on these embodiments, which is not limited specifically herein.

### Embodiment 1:

### Description

The network may configure the terminal device with the first validity duration and the duration during which the terminal device is capable of continuing transmission, and may configure the terminal device with the starting position of the first validity duration, making the terminal device be able to determine the ending position of the first validity duration based on the starting position of the first validity duration and the first validity duration. Thus, in "Embodiment 1" of the present application, the GNSS measurement starting position may be determined based on the ending position of the first validity duration, which facilitates the determination of the GNSS measurement starting position, in order for GNSS measurements to be performed based on the GNSS measurement starting position.

The ending position of the first validity duration is before the GNSS measurement starting position. In a specific implementation, the present application may introduce a first delay value, also known as an offset. The first delay value may represent the time interval between the ending position of the first validity duration and the GNSS measurement starting position.

In other words, the time interval between the ending position of the first validity duration and the GNSS measurement starting position is the delay value.

In this way, in the present application, the GNSS measurement starting position may be determined based on the ending position of the first validity duration and the first delay value.

Optionally, the first delay value is greater than a value of the duration during which the terminal device is capable of continuing uplink transmission. That is, the time interval between the ending position of the first validity duration and the GNSS measurement starting position is greater than the duration during which the terminal device is capable of continuing uplink transmission.

In this way, it facilitates to ensure the time division between GNSS measurements and uplink transmission, that is, the uplink transmission and GNSS measurements are separated in time.

For example, as shown in FIG. 9, the time interval between the ending position of the first validity duration and the GNSS measurement starting position is the first delay value Y, and the value of the duration during which the terminal device is capable of continuing uplink transmission is X, where Y>X.

Optionally, the first delay value may be configured implicitly or explicitly, which will be explained respectively below.

### Implicit Indication

The first delay value may be configured by an implicit indication. The implicit indication may be the association of the first delay value with a value of a duration during which a terminal device is capable of continuing uplink transmission.

In this way, when the terminal device obtains the value of the duration during which it is capable of continuing uplink transmission, the terminal device may determine the first delay value based on the value of the duration during which it is capable of continuing uplink transmission and the association, thereby achieving the implicit indication of the first delay value.

For example, if the duration during which the terminal device is capable of continuing uplink transmission as configured by the network is X1 and the corresponding first delay value is Y1, the terminal device may determine Y1 based on X1, and then determine the GNSS measurement starting position based on the ending position of the first validity duration and Y1.

Optionally, the association may be configured by the network, pre-configured, or defined in protocol.

Optionally, different values of a duration during which a terminal device is capable of continuing uplink transmission are associated with the same first delay value.

In this way, in the present application, the implicit indication may be used to configure one first delay value for different terminal devices or for the same terminal device, which is easy to implement by the network.

For example, if the network desires to configure one first delay value for a certain cell or a group of terminal devices, the network may configure different values of a duration during which a terminal device is capable of continuing uplink transmission being associated with one first delay value.

As another example, each time, the network configures a different value for the duration during which the same terminal device is capable of continuing uplink transmission. Although a different value of the duration during which the terminal device is capable of continuing uplink transmission is configured each time, the network only needs to configure the association once, and subsequently, each time the terminal device may continue to use the first delay value as configured in the first configuration, thereby reducing network complexity.

Optionally, different values of a duration during which a terminal device is capable of continuing uplink transmission are associated with first delay values that are the same.

In this way, in the present application, the implicit indication may be used to configure the same first delay value for different terminal devices or for the same terminal device, which is easy to implement by the network and reduces the complexity of the network.

For example, if the network has multiple candidate first delay values for a certain cell or a group of terminal devices, the network may select one from the multiple candidate first delay values and configure the selected first delay value for the cell or group of terminal devices.

As another example, each time, the network configures a different value for the duration during which the same terminal device is capable of continuing uplink transmission. Although a different value of the duration during which uplink transmission can continue may be configured each time, the same first delay value may be configured each time based on the association, in order to reduce the complexity of the network.

Optionally, different values of a duration during which a terminal device is capable of continuing uplink transmission are associated with different first delay values.

In this way, in the present application, the implicit indication may be used to configure different first delay values for different terminal devices or for the same terminal device, in order to improve the flexibility of the network.

For example, if the network has multiple candidate first delay values for a certain cell or a group of terminal devices, the network may configure different first delay values for various terminal devices in the cell or the group.

As another example, the network may configure a different value for the duration during which the same terminal device is capable of continuing uplink transmission each time, and may configure a different first delay value based on the association each time, thereby improving the flexibility of the network.

### Explicit Indication

The first delay value may be configured using an explicit indication. The explicit indication may be implemented by the network directly configuring the first delay value.

In this way, the network may directly configure the first delay value, so that the terminal device may determine the GNSS measurement starting position based on the ending position of the first validity duration and the first delay value, thereby achieving explicit indication of the first delay value.

For example, the network may send a certain signaling to the terminal device (such as MAC CE, RRC signaling, DCI, MAC signaling, UE specific signaling, etc.), which is used to configure the first delay value.

### Embodiment 2:

### Description

Due to the fact that the terminal device may know the starting and ending positions of the duration during which it is capable of continuing uplink transmission, in "Embodiment 2" of the present application, the GNSS measurement starting position may be determined based on the ending position of the duration during which the terminal device is capable of continuing uplink transmission, which facilitates the determination of the GNSS measurement starting position, in order to perform GNSS measurements based on the GNSS measurement starting position.

The ending position of the duration during which the terminal device is capable of continuing uplink transmission is before the GNSS measurement starting position, and the starting position of the duration during which the terminal device is capable of continuing uplink transmission is the ending position of the first validity duration.

In a specific implementation, the present application may introduce a second delay value, also known as an offset. The second delay value may represent the time interval between the ending position of the duration during which the terminal device is capable of continuing uplink transmission and the GNSS measurement starting position.

That is, the time interval between the ending position of the duration during which the terminal device is capable of continuing uplink transmission and the GNSS measurement starting position is the second delay value.

In this way, in the present application, the GNSS measurement starting position may be determined based on the ending position of the duration during which the terminal device is capable of continuing uplink transmission and the second delay value. Furthermore, there is a time interval between the ending position of the duration during which the terminal device is capable of continuing uplink transmission and the GNSS measurement starting position, that is, the time interval between the ending position of the first validity duration and the GNSS measurement starting position is greater than the duration during which the terminal device is capable of continuing uplink transmission, which facilitates to ensure the time division between GNSS measurements and uplink transmission. That is, uplink transmission and GNSS measurements are separated in time.

For example, as shown in FIG. 10, the time interval between the ending position of the duration during which the terminal device is capable of continuing uplink transmission and the GNSS measurement starting position is the second delay value Z, and the value of the duration during which the terminal device is capable of continuing uplink transmission is X.

Optionally, the second delay value may be configured implicitly or explicitly, which will be explained respectively below.

### Implicit Indication

The second delay value may be configured by an implicit indication. The implicit indication may be the association of the second delay value with a value of a duration during which a terminal device is capable of continuing uplink transmission.

In this way, when the terminal device obtains the value of the duration during which it is capable of continuing uplink transmission, the terminal device may determine the second delay value based on the value of the duration during which it is capable of continuing uplink transmission and the association, thereby achieving the implicit indication of the second delay value.

For example, if the duration during which the terminal device is capable of continuing uplink transmission as configured by the network is X1 and the corresponding second delay value is Z1, the terminal device may determine Z1 based on X1, and then determine the GNSS measurement starting position based on the ending position of the duration during which the terminal device is capable of continuing uplink transmission and Z1.

Optionally, the association may be configured by the network, pre-configured, or defined in protocol.

Optionally, different values of a duration during which a terminal device is capable of continuing uplink transmission are associated with the same second delay value.

In this way, in the present application, the implicit indication may be used to configure one second delay value for different terminal devices or for the same terminal device, which is easy to implement by the network.

For example, if the network desires to configure one second delay value for a certain cell or a group of terminal devices, the network may configure different values of a duration during which a terminal device is capable of continuing uplink transmission being associated with one second delay value.

As another example, each time, the network configures a different value for the duration during which the same terminal device is capable of continuing uplink transmission. Although a different value of the duration during which uplink transmission can continue is configured each time, the network only needs to configure the association once, and subsequently, each time the terminal device may continue to use the second delay value as configured in the first configuration, thereby reducing the complexity of the network.

Optionally, different values of a duration during which a terminal device is capable of continuing uplink transmission are associated with second delay values that are the same.

In this way, in the present application, the implicit indication may be used to configure the same first delay value for different terminal devices or for the same terminal device, which is easy to implement by the network and reduces the complexity of the network.

For example, if the network has multiple candidate first delay values for a certain cell or a group of terminal devices, the network may select one from the multiple candidate first delay values and configure the selected first delay value for the cell or group of terminal devices.

As another example, each time, the network configures a different value for the duration during which the same terminal device is capable of continuing uplink transmission. Although a different value of the duration during which uplink transmission may continue may be configured each time, the same first delay value may be configured each time based on the association, in order to reduce the complexity of the network.

Optionally, different values of a duration during which a terminal device is capable of continuing uplink transmission are associated with different second delay values.

In this way, in the present application, the implicit indication may be used to configure different second delay values for different terminal devices or for the same terminal device, in order to improve the flexibility of the network.

For example, if the network has multiple candidate second delay values for a certain cell or a group of terminal devices, the network may configure different second delay values for various terminal devices in the cell or the group.

As another example, the network may configure a different value for the duration during which the same terminal device is capable of continuing uplink transmission each time, and may configure a different second delay value based on the association each time, thereby improving the flexibility of the network.

### Explicit Indication

The second delay value may be configured by an explicit indication. The explicit indication may be implemented by the network directly configuring the second delay value.

In this way, the network may directly configure the second delay value, so that the terminal device may determine the GNSS measurement starting position based on the ending position of the duration during which the terminal device is capable of continuing uplink transmission and the second delay value, thereby achieving explicit indication of the second delay value.

For example, the network may send a certain signaling to the terminal device (such as MAC CE, RRC signaling, DCI, MAC signaling, UE specific signaling, etc.), which is used to configure the second delay value.

### Embodiment 3:

### Description

Since the terminal device may know the timeout position of the uplink timeAlignmentTimer, in "Embodiment 3" of the present application, the GNSS measurement starting position may be determined based on the timeout position of the uplink timeAlignmentTimer, which facilitates the determination of the GNSS measurement starting position, in order to perform GNSS measurements based on the GNSS measurement starting position.

The timeout position of the uplink timeAlignmentTimer is before the GNSS measurement starting position, and the timeout position of the uplink timeAlignmentTimer is after the ending position of the first validity duration.

In a specific implementation, the present application may introduce a third delay value, also known as an offset. The third delay value may represent the time interval between the timeout position of the uplink timeAlignmentTimer and the GNSS measurement starting position.

That is, the time interval between the timeout position of the uplink timeAlignmentTimer and the GNSS measurement starting position is the third delay value.

In this way, in the present application, the GNSS measurement starting position may be determined based on the timeout position of the uplink timeAlignmentTimer and the third delay value. Furthermore, there is a time interval between the timeout position of the uplink timeAlignmentTimer and the GNSS measurement starting position, that is, the time interval between the ending position of the first validity duration and the GNSS measurement starting position is greater than the duration during which the terminal device is capable of continuing uplink transmission, which facilitates to ensure the time division between GNSS measurements and uplink transmission. That is, uplink transmission and GNSS measurements are separated in time.

For example, as shown in FIG. 11, the time interval between the timeout position of the uplink timeAlignmentTimer and the GNSS measurement starting position is the third delay value N, and a value of a remaining duration of the uplink timeAlignmentTimer when the first validity duration expires is M (that is, a remaining duration value M).

Optionally, the third delay value may be configured implicitly or explicitly, which will be explained respectively below.

### Implicit Indication

The third delay value may be configured by an implicit indication. The implicit indication may be the association of the third delay value with a remaining duration value, the remaining duration value represents a value of a remaining duration of the uplink timeAlignmentTimer when the first validity duration ends.

In this way, since the terminal device may know the timeout position of the uplink timeAlignmentTimer and the ending position of the first validity duration, the terminal device may obtain the remaining duration value, and then determine the third delay value based on the remaining duration value and the above-mentioned association, thereby achieving implicit indication of the third delay value.

For example, if the remaining duration value is M1 and its corresponding third delay value is N1, the terminal device may determine N1 based on M1, and then determine the GNSS measurement starting position based on the timeout position of the uplink timeAlignmentTimer and N1.

Optionally, the association may be configured by the network, pre-configured, or defined in protocol.

Optionally, different remaining duration values are associated with the same third delay value.

In this way, in the present application, the implicit indication may be used to configure one third delay value for different terminal devices or for the same terminal device, which is easy to implement by the network.

For example, if the network desires to configure one third delay value for a certain cell or a group of terminal devices, the network may configure different values of the remaining duration being associated with one third delay value.

As another example, the same terminal device obtains different remaining duration values. Although the remaining duration value obtained each time is different, the network only needs to configure the association once, and subsequently, each time the terminal device may continue to use the third delay value as configured in the first configuration, thereby reducing the complexity of the network.

Optionally, different remaining duration values are associated with third delay values that are the same.

In this way, in the present application, the implicit indication may be used to configure the same third delay value for different terminal devices or for the same terminal device, which is easy to implement by the network and reduces the complexity of the network.

For example, if the network has multiple candidate third delay values for a certain cell or a group of terminal devices, the network may select one from the multiple candidate third delay values and configure the selected third delay value for the cell or group of terminal devices.

As another example, the same terminal device obtains a different remaining duration value each time. Although a different remaining duration value is obtained each time, the same third delay value may be configured each time based on the association, reducing the complexity of the network.

Optionally, different remaining duration values are associated with different third delay values.

In this way, in the present application, the implicit indication may be used to configure different third delay values for different terminal devices or for the same terminal device, in order to improve the flexibility of the network.

For example, if the network has multiple candidate third delay values for a certain cell or a group of terminal devices, the network may configure different third delay values for various terminal devices in the cell or the group.

As another example, the same terminal device may obtain a different remaining duration value each time, and may configure a different third delay value each time based on the association, thereby improving the flexibility of the network.

### Explicit Indication

The third delay value may be configured by an explicit indication. The explicit indication may be implemented by the network directly configuring the third delay value.

In this way, the network may directly configure the third delay value, so that the terminal device may determine the GNSS measurement starting position based on the timeout position of the uplink timeAlignmentTimer and the third delay value, thereby achieving explicit indication of the third delay value.

For example, the network may send a certain signaling to the terminal device (such as MAC CE, RRC signaling, DCI, MAC signaling, UE specific signaling, etc.), which is used to configure the third delay value.

### Embodiment 4:

### Description

Since the network will configure the terminal device with the first validity duration and uplink timeAlignmentTimer, the terminal device may know the starting and ending positions of the first validity duration, as well as the timeout position of the uplink timeAlignmentTimer. Therefore, in "Embodiment 4" of the present application, the GNSS measurement starting position may be determined based on the ending position of the first validity duration, which facilitates the determination of the GNSS measurement starting position, in order to perform GNSS measurements based on the GNSS measurement starting position.

The ending position of the first validity duration is before the GNSS measurement starting position.

In a specific implementation, the present application may introduce a first delay value, also known as an offset. The delay value may represent the time interval between the ending position of the first validity duration and the GNSS measurement starting position.

In other words, the time interval between the ending position of the first validity duration and the GNSS measurement starting position is the delay value.

In this way, in the present application, the GNSS measurement starting position may be determined based on the ending position of the first validity duration and the first delay value.

Optionally, the first delay value is greater than a value of a remaining duration of the uplink timeAlignmentTimer when the first validity duration ends. That is, the time interval between the ending position of the first validity duration and the GNSS measurement starting position is greater than the duration during which the terminal device is capable of continuing uplink transmission.

In this way, it facilitates to ensure the time division between GNSS measurements and uplink transmission, that is, the uplink transmission and GNSS measurements are separated in time.

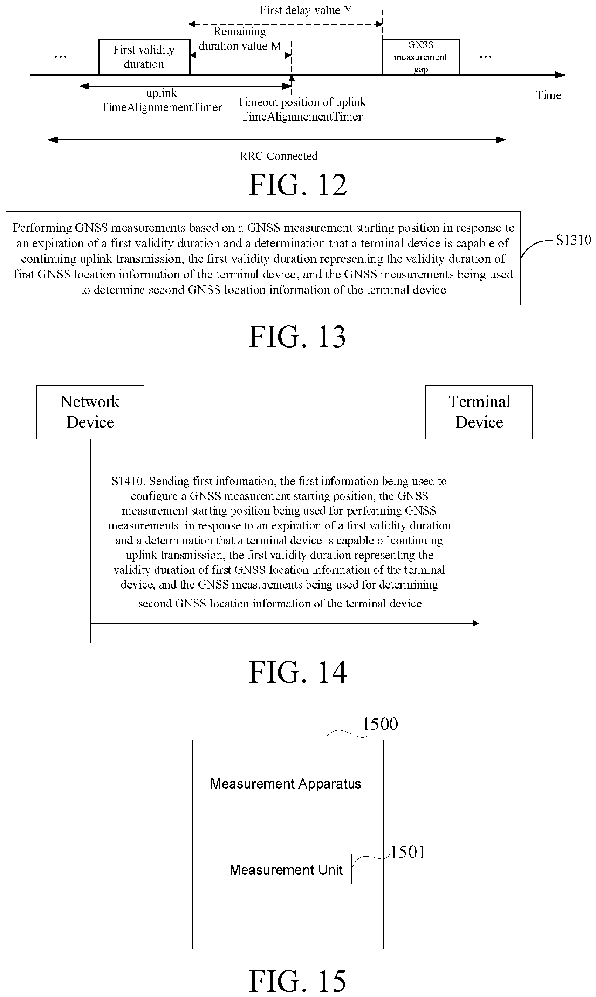

For example, as shown in FIG. 12, the time interval between the ending position of the first validity duration and the GNSS measurement starting position is the first delay value Y, and the value of the remaining duration of the uplink timeAlignmentTimer at the end of the first validity duration is M (that is, the remaining duration value M), where Y>M.

Optionally, the first delay value may be configured implicitly or explicitly, which will be explained respectively below.

### Implicit Indication

The first delay value may be configured by an implicit indication. The implicit indication may be the association of the first delay value with a remaining duration value, the remaining duration value represents a value of a remaining duration of the uplink timeAlignmentTimer at the end of the first validity duration.

In this way, since the terminal device may know the timeout position of the uplink timeAlignmentTimer and the ending position of the first validity duration, the terminal device may obtain the remaining duration value, and then determine the first delay value based on the remaining duration value and the above-mentioned association, thereby achieving implicit indication of the first delay value.

For example, if the remaining duration value obtained by the terminal device is M1 and the corresponding first delay value is Y1, the terminal device may determine Y1 based on M1, and then determine the GNSS measurement starting position based on the ending position of the first validity duration and Y1.

Optionally, the association may be configured by the network, pre-configured, or defined in protocol.

Optionally, different remaining duration values are associated with the same first delay value.

In this way, in the present application, the implicit indication may be used to configure one first delay value for different terminal devices or for the same terminal device, which is easy to implement by the network.

For example, if the network desires to configure one first delay value for a certain cell or a group of terminal devices, the network may configure different values of the remaining duration being associated with one first delay value.

As another example, the same terminal device obtains different remaining duration values. Although the remaining duration value obtained each time is different, the network only needs to configure the association once, and subsequently, each time the terminal device may continue to use the first delay value as configured in the first configuration, thereby reducing the complexity of the network.

Optionally, different remaining duration values are associated with first delay values that are the same.

In this way, in the present application, the implicit indication may be used to configure the same first delay value for different terminal devices or for the same terminal device, which is easy to implement by the network and reduces the complexity of the network.

For example, if the network has multiple candidate first delay values for a certain cell or a group of terminal devices, the network may select one from the multiple candidate first delay values and configure the selected first delay value for the cell or group of terminal devices.

As another example, the same terminal device obtains a different remaining duration value each time. Although a different remaining duration value is obtained each time, the same first delay value may be configured each time based on the association, reducing the complexity of the network.

Optionally, different remaining duration values are associated with different first delay values.

In this way, in the present application, the implicit indication may be used to configure different first delay values for different terminal devices or for the same terminal device, in order to improve the flexibility of the network.

For example, if the network has multiple candidate first delay values for a certain cell or a group of terminal devices, the network may configure different first delay values for various terminal devices in the cell or the group.

As another example, the same terminal device may obtain a different remaining duration value each time, and may configure a different first delay value each time based on the association, improving the flexibility of the network.

### Explicit indication

The first delay value may be configured using an explicit indication. The explicit indication may be implemented by the network directly configuring the first delay value.

In this way, the network may directly configure the first delay value, so that the terminal device may determine the GNSS measurement starting position based on the ending position of the first validity duration and the first delay value, thereby achieving explicit indication of the first delay value.

For example, the network may send a certain signaling to the terminal device (such as MAC CE, RRC signaling, DCI, MAC signaling, UE specific signaling, etc.), which is used to configure the first delay value.

### 3. Exemplary Illustration of a Measurement Method

### 1) Description

Based on the above content, the following provides an exemplary introduction of a measurement method in an embodiment of the present application. The method may be applicable to a terminal device. The terminal device may also be a chip/chip module/device, etc., which is not limited specifically herein.

As shown in FIG. 13, it is a schematic flowchart of a measurement method according to an embodiment of the present application, which specifically includes the following steps.

S1310, GNSS measurements are performed based on a GNSS measurement starting position, in response to an expiration of a first validity duration and a determination that a terminal device is capable of continuing uplink transmission, the first validity duration representing the validity duration of first GNSS location information of the terminal device, and the GNSS measurements being used to determine second GNSS location information of the terminal device. It should be noted that, the description for "first validity duration", "GNSS location information", "terminal device is capable of continuing uplink transmission", "GNSS measurement starting position", etc., may refer to the above content for details and will not be repeated here.

It can be seen that although the first validity duration expires, in some scenarios, the terminal device is still capable of continuing uplink transmission for a period of time. Therefore, if the first validity duration expires and the terminal device is capable of continuing uplink transmission, since the terminal device in RRC Connected state is unable to perform both GNSS measurements and uplink transmission simultaneously, in the present application, the GNSS measurement starting position needs to be determined first, and then GNSS measurements are performed based on the GNSS measurement starting position to achieve GNSS measurement enhancement.

### 2) Some Possible Implementations

Some possible implementations are illustrated below. Some specific description may be found above, and will not be repeated here. Optionally, the time interval between the ending position of the first validity duration and the GNSS measurement starting position is greater than the duration during which the terminal device is capable of continuing uplink transmission. In this way, it facilitates to ensure the time division between GNSS measurements and uplink transmission, that is, the uplink transmission and GNSS measurements are separated in time.

It can be seen that although the first validity duration expires, in some scenarios, the terminal device is still capable of continuing uplink transmission for a period of time. Therefore, if the first validity duration expires and the terminal device is capable of continuing uplink transmission, since the terminal device in RRC Connected state is unable to perform both GNSS measurements and uplink transmission simultaneously, in the present application, the GNSS measurement starting position needs to be determined first. The GNSS measurement starting position needs to be time-divided with the uplink transmission continued by the terminal device. Then, GNSS measurements are performed based on the GNSS measurement starting position, ensuring that uplink transmission and GNSS measurements are separated in time, achieving GNSS measurement enhancement.

Optionally, the GNSS measurement starting position is determined based on the ending position of the first validity duration.

The ending position of the first validity duration is before the GNSS measurement starting position.

It should be noted that, in combination with the content of "Embodiment 1" described above, the network may configure the terminal device with the first validity duration and the duration during which the terminal device is capable of continuing transmission, so that the terminal device may know the starting and ending positions of the first validity duration. In "Embodiment 1" of the present application, the GNSS measurement starting position may be determined based on the ending position of the first validity duration, which facilitates the determination of the GNSS measurement starting position, in order to perform GNSS measurements based on the GNSS measurement starting position.

Optionally, the GNSS measurement starting position being determined based on the ending position of the first validity duration, comprises:
the GNSS measurement starting position being determined based on the ending position of the first validity duration and the first delay value, the first delay value representing the time interval between the ending position of the first validity duration and the GNSS measurement starting position; or
the time interval between the ending position of the first validity duration and the GNSS measurement starting position being the first delay value.

It should be noted that, in combination with the content of "Embodiment 1" described above, in the present application, the GNSS measurement starting position may be determined based on the ending position of the first validity duration and the first delay value.

Optionally, the first delay value is associated with a value of a duration during which a terminal device is capable of continuing uplink transmission.

It should be noted that, in combination with the content of "Embodiment 1" described above, in the present application, an implicit indication may be used to configure the first delay value In this way, when the terminal device obtains the value of the duration during which it is capable of continuing uplink transmission, the terminal device may determine the first delay value based on the value of the duration during which it is capable of continuing uplink transmission and the association, thereby achieving the implicit indication of the first delay value.

Optionally, different values of a duration during which a terminal device is capable of continuing uplink transmission are associated with one first delay value, or associated with first delay values that are the same; or
different values of a duration during which a terminal device is capable of continuing uplink transmission are associated with different first delay values.

It should be noted that, in combination with the content of "Embodiment 1" described above, in the present application, the implicit indication may be used to configure one first delay value for different terminal devices or for the same terminal device, which is easy to implement by the network.

In the present application, the implicit indication may be used to configure the same first delay value for different terminal devices or for the same terminal device, which is easy to implement by the network and reduces the complexity of the network.

In the present application, the implicit indication may be used to configure different first delay values for different terminal devices or for the same terminal device, in order to improve the flexibility of the network.

Optionally, the first delay value is associated with a remaining duration value.

The remaining duration value represents a value of a remaining duration of the uplink timeAlignmentTimer at the end of the first validity duration, wherein the uplink timeAlignmentTimer is associated with a timing advance group TAG.

It should be noted that, in combination with the content of "Embodiment 4" described above, since the terminal device may know the timeout position of the uplink timeAlignmentTimer and the ending position of the first validity duration, the terminal device may obtain the remaining duration value, and then determine the first delay value based on the remaining duration value and the above-mentioned association, thereby achieving implicit indication of the first delay value.

Optionally, different remaining duration values are associated with one first delay value, or associated with first delay values that are the same; or
different remaining duration values are associated with different first delay values.

It should be noted that, in combination with the content of "Embodiment 4" described above, in the present application, the implicit indication may be used to configure one first delay value for different terminal devices or for the same terminal device, which is easy to implement by the network.

In the present application, the implicit indication may be used to configure the same first delay value for different terminal devices or for the same terminal device, which is easy to implement by the network and reduces the complexity of the network.

In the present application, the implicit indication may be used to configure different first delay values for different terminal devices or for the same terminal device, in order to improve the flexibility of the network.

Optionally, the GNSS measurement starting position is determined based on the ending position of the duration during which the terminal device is capable of continuing uplink transmission.

The ending position of the duration during which the terminal device is capable of continuing uplink transmission is before the GNSS measurement starting position, and the starting position of the duration during which the terminal device is capable of continuing uplink transmission is the ending position of the first validity duration.

It should be noted that in combination with the content of "Embodiment 2" described above, since the terminal device may know the starting and ending positions of the duration during which it is capable of continuing uplink transmission, in "Embodiment 2" of the present application, the GNSS measurement starting position may be determined based on the ending position of the duration during which the terminal device is capable of continuing uplink transmission, which facilitates the determination of the GNSS measurement starting position, in order to perform GNSS measurements based on the GNSS measurement starting position.

Optionally, the GNSS measurement starting position being determined based on the ending position of the duration during which the terminal device is capable of continuing uplink transmission, comprises:
the GNSS measurement starting position being determined based on the ending position of the duration during which the terminal device is capable of continuing uplink transmission and a second delay value, wherein the second delay value represents the time interval between the ending position of the duration during which the terminal device is capable of continuing uplink transmission and the GNSS measurement starting position; or the time interval between the ending position of the duration during which the terminal device is capable of continuing uplink transmission and the GNSS measurement starting position is the second delay value.

It should be noted that, in combination with the content of "Embodiment 2" described above, in the present application, the GNSS measurement starting position may be determined based on the ending position of the duration during which the terminal device is capable of continuing uplink transmission and the second delay value.

Optionally, the second delay value is associated with a value of the duration during which the terminal device is capable of continuing uplink transmission.

It should be noted that, in combination with the content of "Embodiment 2" described above, when the terminal device obtains the value of the duration during which it is capable of continuing uplink transmission, the terminal device may determine the second delay value based on the value of the duration during which it is capable of continuing uplink transmission and the association, thereby achieving the implicit indication of the second delay value.

Optionally, different values of a duration during which a terminal device is capable of continuing uplink transmission are associated with one second delay value, or associated with second delay values that are the same; or
different values of a duration during which a terminal device is capable of continuing uplink transmission are associated with different second delay values.

It should be noted that, in combination with the content of "Embodiment 2" described above, in the present application, the implicit indication may be used to configure one second delay value for different terminal devices or for the same terminal device, which is easy to implement by the network.

In the present application, the implicit indication may be used to configure the same second delay value for different terminal devices or for the same terminal device, which is easy to implement by the network and reduces the complexity of the network.

In the present application, the implicit indication may be used to configure different second delay values for different terminal devices or for the same terminal device, in order to improve the flexibility of the network.

Optionally, the GNSS measurement starting position is determined based on the timeout position of the uplink timeAlignmentTimer, wherein the uplink timeAlignmentTimer is associated with a TAG.

The timeout position of the uplink timeAlignmentTimer is before the GNSS measurement starting position, and the timeout position of the uplink timeAlignmentTimer is after the ending position of the first validity duration.

It should be noted that in combination with the content of "Embodiment 3" described above, since the terminal device may know the timeout position of the uplink timeAlignmentTimer, in "Embodiment 3" of the present application, the GNSS measurement starting position may be determined based on the timeout position of the uplink timeAlignmentTimer, which facilitates the determination of the GNSS measurement starting position, in order to perform GNSS measurements based on the GNSS measurement starting position.

Optionally, the GNSS measurement starting position being determined based on the timeout position of the uplink timeAlignmentTimer, comprises:
the GNSS measurement starting position being determined based on the timeout position of the uplink timeAlignmentTimer and a third delay value, wherein the third delay value represents the time interval between the timeout position of the uplink timeAlignmentTimer and the GNSS measurement starting position; or
the time interval between the timeout position of the uplink timeAlignmentTimer and the GNSS measurement starting position is the third delay value.

It should be noted that, in combination with the content of "Embodiment 3" described above, in the present application, the GNSS measurement starting position may be determined based on the timeout position of the uplink timeAlignmentTimer and the third delay value.

Optionally, the third delay value is associated with a remaining duration value.

The remaining duration value represents a value of a remaining duration of the uplink timeAlignmentTimer at the end of the first validity duration.

It should be noted that, in combination with the content of "Embodiment 3" described above, since the terminal device may know the timeout position of the uplink timeAlignmentTimer and the ending position of the first validity duration, the terminal device may obtain the remaining duration value, and then determine the third delay value based on the remaining duration value and the above-mentioned association, thereby achieving implicit indication of the third delay value.

Optionally, different remaining duration values are associated with one third delay value, or associated with third delay values that are the same; or
different remaining duration values are associated with different third delay values.

It should be noted that, in combination with the content of "Embodiment 3" described above, in the present application, the implicit indication may be used to configure one third delay value for different terminal devices or for the same terminal device, which is easy to implement by the network.

In the present application, the implicit indication may be used to configure the same third delay value for different terminal devices or for the same terminal device, which is easy to implement by the network and reduces the complexity of the network.

In the present application, the implicit indication may be used to configure different third delay values for different terminal devices or for the same terminal device, in order to improve the flexibility of the network.

Optionally, GNSS measurements are autonomously performed by the terminal device.

It should be noted that, based on the content of "Approach 2" described above, when the GNSS validity duration expires but the terminal device has not received trigger signaling sent by the network, the terminal device may autonomously perform GNSS measurements.

### 4. Exemplary Illustration of a Communication Method

### 1) Description

In combination with the above content, the interaction between a network device and a terminal device is provided below as an example, to illustrate a communication method of an embodiment of the present application. The network device may be a chip/chip module/apparatus, etc., and the terminal device may be a chip/chip module/apparatus, etc., which is not limited specifically herein.

As shown in FIG. 14, it is a schematic flowchart of a communication method according to an embodiment of the present application, which specifically includes the following steps.

S1410, send first information, the first information being used to configure a GNSS measurement starting position, the GNSS measurement starting position being used for performing GNSS measurements in response to an expiration of a first validity duration and a determination that the terminal device is capable of continuing uplink transmission, the first validity duration representing a validity duration of first GNSS location information of the terminal device, and the GNSS measurements being used for determining second GNSS location information of the terminal device.

Correspondingly, the terminal device receives the first information.

It should be noted that, the description for "first validity duration", "GNSS location information", "terminal device is capable of continuing uplink transmission", "GNSS measurement starting position", etc., may refer to the above content for details and will not be repeated here.

It can be seen that although the first validity duration expires, in some scenarios, the terminal device is still capable of continuing uplink transmission for a period of time. Therefore, if the first validity duration expires and the terminal device is capable of continuing uplink transmission, since the terminal device in RRC Connected state is unable to perform both GNSS measurements and uplink transmission simultaneously, in the present application, the GNSS measurement starting position needs to be determined first, and then GNSS measurements are performed based on the GNSS measurement starting position to achieve GNSS measurement enhancement.

### 2) Some Possible Implementations

Some possible implementations are illustrated below. Some specific description may be found above, and will not be repeated here.

Optionally, the time interval between the ending position of the first validity duration and the GNSS measurement starting position is greater than the duration during which the terminal device is capable of continuing uplink transmission. In this way, it facilitates to ensure the time division between GNSS measurements and uplink transmission. That is, the uplink transmission and GNSS measurements are separated in time.

It can be seen that although the first validity duration expires, in some scenarios, the terminal device is still capable of continuing uplink transmission for a period of time. Therefore, if the first validity duration expires and the terminal device is capable of continuing uplink transmission, since the terminal device in RRC Connected state is unable to perform both GNSS measurements and uplink transmission simultaneously, in the present application, the GNSS measurement starting position needs to be determined first. The GNSS measurement starting position needs to be time-divided with the uplink transmission continued by the terminal device. Then, GNSS measurements are performed based on the GNSS measurement starting position, ensuring that uplink transmission and GNSS measurements are separated in time, achieving GNSS measurement enhancement.

Optionally, the first information includes a first delay value, which represents the time interval between the ending position of the first validity duration and the GNSS measurement starting position.

The ending position of the first validity duration is before the GNSS measurement starting position.

It should be noted that, in combination with the content of "Embodiment 1" described above, in the present application, the GNSS measurement starting position may be determined based on the ending position of the first validity duration and the first delay value.

Optionally, the first delay value is associated with the value of the duration during which the terminal device is capable of continuing uplink transmission.

It should be noted that, in combination with the content of "Embodiment 1" described above, in the present application, an implicit indication may be used to configure the first delay value In this way, when the terminal device obtains the value of the duration during which it is capable of continuing uplink transmission, the terminal device may determine the first delay value based on the value of the duration during which it is capable of continuing uplink transmission and the association, thereby achieving the implicit indication of the first delay value.

Optionally, different values of a duration during which a terminal device is capable of continuing uplink transmission are associated with one first delay value, or associated with first delay values that are the same; or
different values of a duration during which a terminal device is capable of continuing uplink transmission are associated with different first delay values.

It should be noted that, in combination with the content of "Embodiment 1" described above, in the present application, the implicit indication may be used to configure one first delay value for different terminal devices or for the same terminal device, which is easy to implement by the network.

In the present application, the implicit indication may be used to configure the same first delay value for different terminal devices or for the same terminal device, which is easy to implement by the network and reduces the complexity of the network.

In the present application, the implicit indication may be used to configure different first delay values for different terminal devices or for the same terminal device, in order to improve the flexibility of the network.

Optionally, the first delay value is associated with a remaining duration value.

The remaining duration value represents a value of a remaining duration of the uplink timeAlignmentTimer at the end of the first validity duration, wherein the uplink timeAlignmentTimer is associated with a timing advance group TAG.

It should be noted that, in combination with the content of "Embodiment 4" described above, since the terminal device may know the timeout position of the uplink timeAlignmentTimer and the ending position of the first validity duration, the terminal device may obtain the remaining duration value, and then determine the first delay value based on the remaining duration value and the above-mentioned association, thereby achieving implicit indication of the first delay value.

Optionally, different remaining duration values are associated with one first delay value, or associated with first delay values that are the same; or
different remaining duration values are associated with different first delay values.

It should be noted that, in combination with the content of "Embodiment 4" described above, in the present application, the implicit indication may be used to configure one first delay value for different terminal devices or for the same terminal device, which is easy to implement by the network.

In the present application, the implicit indication may be used to configure the same first delay value for different terminal devices or for the same terminal device, which is easy to implement by the network and reduces the complexity of the network.

In the present application, the implicit indication may be used to configure different first delay values for different terminal devices or for the same terminal device, in order to improve the flexibility of the network.

Optionally, the first information includes a second delay value, which represents the time interval between the ending position of the duration during which the terminal device is capable of continuing uplink transmission and the GNSS measurement starting position.

The ending position of the duration during which the terminal device is capable of continuing uplink transmission is before the GNSS measurement starting position, and the starting position of the duration during which the terminal device is capable of continuing uplink transmission is the ending position of the first validity duration.

It should be noted that, in combination with the content of "Embodiment 2" described above, in the present application, the GNSS measurement starting position may be determined based on the ending position of the duration during which the terminal device is capable of continuing uplink transmission and the second delay value.

Optionally, the second delay value is associated with the value of the duration during which the terminal device is capable of continuing uplink transmission.

It should be noted that, in combination with the content of "Embodiment 2" described above, when the terminal device obtains the value of the duration during which it is capable of continuing uplink transmission, the terminal device may determine the second delay value based on the value of the duration during which it is capable of continuing uplink transmission and the association, thereby achieving the implicit indication of the second delay value.

Optionally, different values of a duration during which a terminal device is capable of continuing uplink transmission are associated with one second delay value, or associated with second delay values that are the same; or
different values of a duration during which a terminal device is capable of continuing uplink transmission are associated with different second delay values.

It should be noted that, in combination with the content of "Embodiment 2" described above, in the present application, the implicit indication may be used to configure one second delay value for different terminal devices or for the same terminal device, which is easy to implement by the network.

In the present application, the implicit indication may be used to configure the same second delay value for different terminal devices or for the same terminal device, which is easy to implement by the network and reduces the complexity of the network.

In the present application, the implicit indication may be used to configure different second delay values for different terminal devices or for the same terminal device, in order to improve the flexibility of the network.

Optionally, the first information includes a third delay value, which represents the time interval between the timeout position of the uplink timeAlighmentTimer and the GNSS measurement starting position.

The timeout position of the uplink timeAlignmentTimer is before the GNSS measurement starting position, and the timeout position of the uplink timeAlignmentTimer is after the ending position of the first validity duration.

It should be noted that, in combination with the content of "Embodiment 3" described above, in the present application, the GNSS measurement starting position may be determined based on the timeout position of the uplink timeAlignmentTimer and the third delay value.

Optionally, the third delay value is associated with a remaining duration value.

The remaining duration value represents a value of a remaining duration of the uplink timeAlignmentTimer at the end of the first validity duration.

It should be noted that, in combination with the content of "Embodiment 3" described above, since the terminal device may know the timeout position of the uplink timeAlignmentTimer and the ending position of the first validity duration, the terminal device may obtain the remaining duration value, and then determine the third delay value based on the remaining duration value and the above-mentioned association, thereby achieving implicit indication of the third delay value.

Optionally, different remaining duration values are associated with one third delay value, or associated with third delay values that are the same; or
different remaining duration values are associated with different third delay values.

It should be noted that, in combination with the content of "Embodiment 3" described above, in the present application, the implicit indication may be used to configure one third delay value for different terminal devices or for the same terminal device, which is easy to implement by the network.

In the present application, the implicit indication may be used to configure the same third delay value for different terminal devices or for the same terminal device, which is easy to implement by the network and reduces the complexity of the network.

In the present application, the implicit indication may be used to configure different third delay values for different terminal devices or for the same terminal device, in order to improve the flexibility of the network.

### IV. Exemplary Illustration of a Measurement Apparatus

### 1. Description

The above description introduces the solutions of embodiments of the present application from the perspective of methods. It can be understood that, a terminal device includes corresponding hardware structures and/or software modules for execution of various functions in order to achieve the above-mentioned functions. Those skilled in the art should easily realize that, in conjunction with the units and steps of examples described in the embodiments herein, the present application may be implemented in the form of hardware or a combination of hardware and computer software. The execution of a certain function through hardware or computer software driven hardware depends on the specific application and design constraints of the technical solution. Those skilled in the art may use different approaches for each specific application to implement the described function, but such an implementation should not be construed as going beyond the scope of the present application.

The embodiments of the present application may divide the functional units of a terminal device based on the above method examples. For example, various functional units may be separated to correspond to various functions, or two or more functions may be integrated into one processing unit. The above integrated units may be implemented in the form of hardware or in the form of software program modules. It should be noted that the division of units in the embodiments of the present application is illustrative and it is only a logical functional division, and there may be other forms of division in actual implementations.

In the case of adopting integrated units, FIG. 15 is a block diagram of a measurement apparatus comprising various functional units according to an embodiment of the present application. The measurement apparatus 1500 comprises a measurement unit 1501.

It should be noted that the measurement unit 1501 may be a modular unit used for GNSS measurements and other purposes.

Optionally, the measurement apparatus 1500 may also comprise a storage unit for storing computer program codes or instructions executed by the measurement unit 1501. The storage unit may be a memory.

Optionally, the measurement apparatus 1500 may also comprise a communication unit. The communication unit may be a communication interface, a transceiver, a transceiver circuit, etc.

Optionally, the measurement apparatus 1500 may be a chip or a chip module.

Optionally, the measurement unit 1501 may be integrated into one processing unit.

It should be noted that the processing unit may be a processor or controller, e.g. a central processing unit (CPU), a general-purpose processor, a digital signal processor (DSP), an application-specific integrated circuit (ASIC), a field programmable gate array (FPGA), or other programmable logic devices, transistor logic devices, hardware components, or any combination thereof. It can implement or execute various exemplary logical blocks, modules, and circuits described in conjunction with the disclosure of the present application. The processing unit may also be a combination of computing functions, e.g. a combination of one or more microprocessors, a combination of DSP and microprocessors, etc.

In a specific implementation, the measurement unit 1501 is used to perform the steps executed by a terminal device/chip/chip module/network device as described in the above-mentioned method embodiments. Below is a detailed explanation.

The measurement unit 1510 is configured to perform GNSS measurements based on a GNSS measurement starting position in response to an expiration of a first validity duration and a determination that a terminal device is capable of continuing uplink transmission, the first validity duration representing the validity duration of first GNSS location information of the terminal device, and the GNSS measurements being used to determine second GNSS location information of the terminal device.

It can be seen that although the first validity duration expires, in some scenarios, the terminal device is still capable of continuing uplink transmission for a period of time. Therefore, if the first validity duration expires and the terminal device is capable of continuing uplink transmission, since the terminal device in RRC Connected state is unable to perform both GNSS measurements and uplink transmission simultaneously, the present application needs to first determine the GNSS measurement starting position, and then perform GNSS measurements based on the GNSS measurement starting position to achieve GNSS measurement enhancement.

It should be noted that the specific implementation of each operation in the embodiment described in FIG. 15 may be found in the description of the method embodiments described above, and will not be repeated here.

### 2. Some Possible Implementations

Some possible implementations are illustrated below. Some specific description may be found above, and will not be repeated here.

Optionally, the time interval between the ending position of the first validity duration and the GNSS measurement starting position is greater than the duration during which the terminal device is capable of continuing uplink transmission.

Optionally, the GNSS measurement starting position is determined based on the ending position of the first validity duration;

The ending position of the first validity duration is before the GNSS measurement starting position.

Optionally, the GNSS measurement starting position being determined based on the ending position of the first validity duration, comprises:
the GNSS measurement starting position being determined based on the ending position of the first validity duration and the first delay value, the first delay value representing the time interval between the ending position of the first validity duration and the GNSS measurement starting position; or
the time interval between the ending position of the first validity duration and the GNSS measurement starting position being the first delay value.

Optionally, the first delay value is associated with a value of a duration during which a terminal device is capable of continuing uplink transmission.

Optionally, different values of a duration during which a terminal device is capable of continuing uplink transmission are associated with the same first delay value, or associated with first delay values that are the same; or
different values of a duration during which a terminal device is capable of continuing uplink transmission are associated with different first delay values.

Optionally, the first delay value is associated with a remaining duration value.

The remaining duration value represents a value of a remaining duration of the uplink timeAlignmentTimer at the end of the first validity duration, wherein the uplink timeAlignmentTimer is associated with a timing advance group TAG.

Optionally, different remaining duration values are associated with one first delay value, or associated with first delay values that are the same; or
different remaining duration values are associated with different first delay values.

Optionally, the GNSS measurement starting position is determined based on the ending position of the duration during which the terminal device is capable of continuing uplink transmission.

The ending position of the duration during which the terminal device is capable of continuing uplink transmission is before the GNSS measurement starting position, and the starting position of the duration during which the terminal device is capable of continuing uplink transmission is the ending position of the first validity duration.

Optionally, the GNSS measurement starting position being determined based on the ending position of the duration during which the terminal device is capable of continuing uplink transmission, comprises:
the GNSS measurement starting position being determined based on the ending position of the duration during which the terminal device is capable of continuing uplink transmission and a second delay value, wherein the second delay value represents the time interval between the ending position of the duration during which the terminal device is capable of continuing uplink transmission and the GNSS measurement starting position; or
the time interval between the ending position of the duration during which the terminal device is capable of continuing uplink transmission and the GNSS measurement starting position is the second delay value.

Optionally, the second delay value is associated with a value of the duration during which the terminal device is capable of continuing uplink transmission.

Optionally, different values of a duration during which a terminal device is capable of continuing uplink transmission are associated with one second delay value, or associated with second delay values that are the same; or
different values of a duration during which a terminal device is capable of continuing uplink transmission are associated with different second delay values.

Optionally, the GNSS measurement starting position is determined based on the timeout position of the uplink timeAlignmentTimer, wherein the uplink timeAlignmentTimer is associated with a TAG.

The timeout position of the uplink timeAlignmentTimer is before the GNSS measurement starting position, and the timeout position of the uplink timeAlignmentTimer is after the ending position of the first validity duration.

Optionally, the GNSS measurement starting position being determined based on the timeout position of the uplink timeAlignmentTimer, comprises:
the GNSS measurement starting position being determined based on the timeout position of the uplink timeAlignmentTimer and a third delay value, wherein the third delay value represents the time interval between the timeout position of the uplink timeAlignmentTimer and the GNSS measurement starting position; or
the time interval between the timeout position of the uplink timeAlignmentTimer and the GNSS measurement starting position is the third delay value.

Optionally, the third delay value is associated with a remaining duration value.

The remaining duration value represents a value of a remaining duration of the uplink timeAlignmentTimer at the end of the first validity duration.

Optionally, different remaining duration values are associated with one third delay value, or associated with third delay values that are the same; or
different remaining duration values are associated with different third delay values.

Optionally, GNSS measurements are autonomously performed by the terminal device.

### V. Exemplary Illustration of a Communication Apparatus

### 1. Description

The above description introduces the solutions of embodiments of the present application from the perspective of methods. It can be understood that, a network device includes corresponding hardware structures and/or software modules for execution of various functions in order to achieve the above-mentioned functions. Those skilled in the art should easily realize that, in conjunction with the units and steps of examples described in the embodiments herein, the present application may be implemented in the form of hardware or a combination of hardware and computer software, based on the units and algorithm steps described in the embodiments herein. The execution of a certain function through hardware or computer software driven hardware depends on the specific application and design constraints of the technical solution. Those skilled in the art may use different approaches for each specific application to implement the described function, but such an implementation should not be construed as going beyond the scope of the present application.

The embodiments of the present application may divide the functional units of a network device based on the above method examples. For example, various functional units may be separated to correspond to various functions, or two or more functions may be integrated into one processing unit. The above integrated units may be implemented in the form of hardware or in the form of software program modules. It should be noted that the division of units in the embodiments of the present application is illustrative and it is only a logical functional division, and there may be other forms of division in actual implementations.

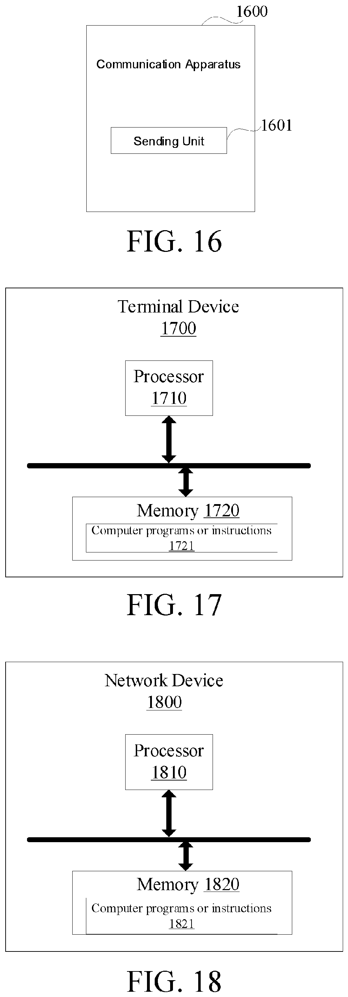

In the case of adopting integrated units, FIG. 16 is a block diagram of a communication apparatus comprising various functional units according to an embodiment of the present application. The communication apparatus 1600 comprises a sending unit 1601.

It should be noted that the sending unit 1601 may be a modular unit used for sending information, etc.

Optionally, the communication apparatus 1600 may also comprise a storage unit for storing computer program codes or instructions executed by the sending unit 1601. The storage unit may be a memory.

Optionally, the communication apparatus 1600 may also comprise a communication unit. The communication unit may be a communication interface, a transceiver, a transceiver circuit, etc.

Optionally, the communication apparatus 1600 may be a chip or a chip module.

Optionally, the sending unit 1601 may be integrated into one processing unit.

It should be noted that the processing unit may be a processor or controller, e.g. a central processing unit (CPU), a general-purpose processor, a digital signal processor (DSP), an application-specific integrated circuit (ASIC), a field programmable gate array (FPGA), or other programmable logic devices, transistor logic devices, hardware components, or any combination thereof. It can implement or execute various exemplary logical blocks, modules, and circuits described in conjunction with the disclosure of the present application. The processing unit may also be a combination of computing functions, e.g. a combination of one or more microprocessors, a combination of DSP and microprocessors, etc.

In a specific implementation, the sending unit 1601 is used to perform the steps executed by a terminal device/chip/chip module/network device as described in the above-mentioned method embodiments. Below is a detailed explanation.

The sending unit 1601 is used to send first information, the first information being used to determine a global navigation satellite system GNSS measurement starting position, the GNSS measurement starting position being used for performing GNSS measurements in response to an expiration of a first validity duration and a determination that the terminal device is capable of continuing uplink transmission, the first validity duration representing a validity duration of first GNSS location information of the terminal device, and the GNSS measurements being used for determining second GNSS location information of the terminal device.

It can be seen that although the first validity duration expires, in some scenarios, the terminal device is still capable of continuing uplink transmission for a period of time. Therefore, in the present application, the terminal device may be configured with the GNSS measurement starting position through the first information. This way, if the first validity duration expires and the terminal device is capable of continuing uplink transmission, since the terminal device in the RRC Connected state is unable to perform both GNSS measurements and uplink transmission simultaneously, the present application needs to first determine the GNSS measurement starting position, and then perform GNSS measurements based on the GNSS measurement starting position to achieve GNSS measurement enhancement.

It should be noted that the specific implementation of each operation in the embodiment described in FIG. 16 may be found in the description of the method embodiments described above, and will not be repeated here.

### 2. Some Possible Implementations

Some possible implementations are illustrated below. Some specific description may be found above, and will not be repeated here.

Optionally, the time interval between the ending position of the first validity duration and the GNSS measurement starting position is greater than the duration during which the terminal device is capable of continuing uplink transmission. In this way, it facilitates to ensure the time division between GNSS measurements and uplink transmission, that is, the uplink transmission and GNSS measurements are separated in time.

Optionally, the first information includes a first delay value, which represents the time interval between the ending position of the first validity duration and the GNSS measurement starting position.

The ending position of the first validity duration is before the GNSS measurement starting position.

Optionally, the first delay value is associated with a value of the duration during which the terminal device is capable of continuing uplink transmission.

Optionally, different values of a duration during which a terminal device is capable of continuing uplink transmission are associated with the same first delay value, or associated with first delay values that are the same; or
different values of a duration during which a terminal device is capable of continuing uplink transmission are associated with different first delay values.

Optionally, the first delay value is associated with a remaining duration value.

The remaining duration value represents a value of a remaining duration of the uplink timeAlignmentTimer at the end of the first validity duration, wherein the uplink timeAlignmentTimer is associated with a timing advance group TAG.

Optionally, different remaining duration values are associated with one first delay value, or associated with first delay values that are the same; or
different remaining duration values are associated with different first delay values.

Optionally, the first information includes a second delay value, which represents the time interval between the ending position of the duration during which the terminal device is capable of continuing uplink transmission and the GNSS measurement starting position.

The ending position of the duration during which the terminal device is capable of continuing uplink transmission is before the GNSS measurement starting position, and the starting position of the duration during which the terminal device is capable of continuing uplink transmission is the ending position of the first validity duration.

Optionally, the second delay value is associated with a value of the duration during which the terminal device is capable of continuing uplink transmission.

Optionally, different values of a duration during which a terminal device is capable of continuing uplink transmission are associated with one second delay value, or associated with second delay values that are the same; or
different values of a duration during which a terminal device is capable of continuing uplink transmission are associated with different second delay values.

Optionally, the first information includes a third delay value, which represents the time interval between the timeout position of the uplink timeAlighmentTimer and the GNSS measurement starting position.

The timeout position of the uplink timeAlignmentTimer is before the GNSS measurement starting position, and the timeout position of the uplink timeAlignmentTimer is after the ending position of the first validity duration.

Optionally, the third delay value is associated with a remaining duration value.

The remaining duration value represents a value of a remaining duration of the uplink timeAlignmentTimer at the end of the first validity duration.

Optionally, different remaining duration values are associated with one third delay value, or associated with third delay values that are the same; or
different remaining duration values are associated with different third delay values.

### VI. Exemplary Illustration of A Terminal Device

Referring to FIG. 17, FIG. 17 is a schematic structural diagram of a terminal device provided by an embodiment of the present application. The terminal device 1700 comprises a processor 1710, a memory 1720, and a communication bus for connecting the processor 1710 with the memory 1720.

Optionally, the memory 1720 includes but is not limited to RAM, ROM, EPROM, or CD-ROM, and is used to store relevant instructions and data.

Optionally, the terminal device 1700 also includes a communication interface for receiving and sending data.

Optionally, the processor 1710 may be one or more central processing units (CPUs). In the case where processor 1710 is a CPU, it can be a single core CPU or a multi-core CPU.

Optionally, the processor 1710 may be a baseband chip, chip, central processing unit (CPU), general-purpose processor, DSP, ASIC, FPGA, or other programmable logic device, transistor logic device, hardware component, or any combination thereof.

Optionally, the processor 1710 in the terminal device 1700 is used to execute computer programs or instructions 1721 stored in memory 1720 to perform the following operations:
performing GNSS measurements based on a GNSS measurement starting position in response to an expiration of a first validity duration and a determination that a terminal device is capable of continuing uplink transmission, the first validity duration representing a validity duration of first GNSS location information of the terminal device, and the GNSS measurements being used to determine second GNSS location information of the terminal device.

It can be seen that although the first validity duration expires, in some scenarios, the terminal device is still capable of continuing uplink transmission for a period of time. Therefore, if the first validity duration expires and the terminal device is capable of continuing uplink transmission, since the terminal device in RRC Connected state is unable to perform both GNSS measurements and uplink transmission simultaneously, in the present application, it needs to first determine the GNSS measurement starting position, and then perform GNSS measurements based on the GNSS measurement starting position to achieve GNSS measurement enhancement.

It should be noted that the specific implementation of each operation may adopt the corresponding description of the method embodiments described above. The terminal device 1700 may be used to execute the method on the terminal device side of the method embodiments described above in the present application, and will not be further repeated.

### VII. Exemplary Illustration of A Network Device

Referring to FIG. 18, FIG. 18 is a schematic structural diagram of a network device provided by an embodiment of the present application. The network device 1800 comprises a processor 1810, a memory 1820, and a communication bus for connecting the processor 1810 with the memory 1820.

Optionally, the memory 1820 includes but is not limited to RAM, ROM, EPROM, or CD-ROM, and is used to store relevant instructions and data.

Optionally, the network device 1800 also includes a communication interface for receiving and sending data.

Optionally, the processor 1810 may be one or more central processing units (CPUs). In the case where processor 1810 is a CPU, it can be a single core CPU or a multi-core CPU.

Optionally, the processor 1810 may be a baseband chip, chip, central processing unit (CPU), general-purpose processor, DSP, ASIC, FPGA, or other programmable logic device, transistor logic device, hardware component, or any combination thereof.

Optionally, the processor 1810 in the terminal device 1800 is used to execute computer programs or instructions 1821 stored in memory 1820 to perform the following operations:
sending first information, the first information being used to configure a GNSS measurement starting position, the GNSS measurement starting position being used for performing GNSS measurements in response to an expiration of a first validity duration and a determination that a terminal device is capable of continuing uplink transmission, the first validity duration representing a validity duration of first GNSS location information of the terminal device, and the GNSS measurement being used for determining second GNSS location information of the terminal device.

It can be seen that although the first validity duration expires, in some scenarios, the terminal device is still capable of continuing uplink transmission for a period of time. Therefore, in the present application, the terminal device may be configured with the GNSS measurement starting position through the first information. This way, if the first validity duration expires and the terminal device is capable of continuing uplink transmission, since the terminal device in the RRC Connected state is unable to perform both GNSS measurements and uplink transmission simultaneously, in the present application, it needs to first determine the GNSS measurement starting position, and then perform GNSS measurements based on the GNSS measurement starting position to achieve GNSS measurement enhancement.

It should be noted that the specific implementation of each operation may adopt the corresponding description of the method embodiments described above. The network device 1800 may be used to execute the method on the terminal device side of the method embodiments described above in the present application, and will not be further repeated.

### VIII. Other Related Exemplary Illustrations

Optionally, the above method embodiments may be applied to a terminal device or applied within a terminal device. That is, the executing subject of the above method embodiments may be a terminal device, a chip, a chip module, or a module, etc., which is not limited specifically herein.

Optionally, the above method embodiments may be applied to a network device or applied within a network device. That is, the executing subject of the above method embodiments may be a network device, a chip, a chip module, or a module, etc., which is not limited specifically herein.

An embodiment of the present application also provides a chip comprising a processor, a memory, and computer programs or instructions stored on the memory, wherein the processor executes the computer programs or instructions to implement the steps described in the above method embodiments.

An embodiment of the present application also provides a chip module comprising a transceiver component and a chip, the chip comprising a processor, a memory, and computer programs or instructions stored on the memory, wherein the processor executes the computer programs or instructions to implement the steps described in the above method embodiments.

An embodiment of the present application also provides a computer-readable storage medium storing computer programs or instructions that, when executed, implement the steps described in the above method embodiments.

An embodiment of the present application also provides a computer program product comprising computer programs or instructions that, when executed, implement the steps described in the above method embodiments.

An embodiment of the present application also provides a communication system comprising the terminal device and the network device described above.

It should be noted that the embodiments mentioned above are described as a combination of a series of actions for a brevity of description. Those skilled in the art should appreciate that the present application is not limited by the described sequence of actions, as some steps in the embodiments of the present application may be performed in other sequences or simultaneously. In addition, those skilled in the art should also appreciate that the embodiments described in the specification are all preferred embodiments, and not all the actions, steps, modules or units involved are required by the embodiments of the present application.

In the embodiments mentioned above, the description of the various embodiments in the present application each emphasize different aspects. For portions not described in detail in a particular embodiment, reference may be made to the relevant description in other embodiments.

The steps of methods or algorithms described in the embodiments of the present application may be implemented in hardware, or may be implemented by a processor executing software instructions. The software instructions may include corresponding software modules, which may be stored in a RAM, flash memory, ROM, EPROM, electrically EPROM (EEPROM), register, hard disk, portable hard disk, CD-ROM, or any other form of storage medium known in the art. An exemplary storage medium is coupled to the processor, thereby enabling the processor to read information from the storage medium and write information to the storage medium. Certainly, the storage medium may also be an integral part of the processor. The processor and the storage medium may reside in an ASIC. Additionally, the ASIC may be located in a terminal device or a management device. Certainly, the processor and the storage medium may also exist as discrete components in a terminal device or a management device.

Those skilled in the art should appreciate that in one or more of the above examples, the functions described in the embodiments of the present application may be implemented entirely or partially through software, hardware, firmware, or any combination thereof. When implemented through software, these functions may be entirely or partially implemented in the form of a computer program product. The computer program product includes one or more computer instructions. When the computer program instructions are loaded and executed on a computer, the processes or functions described in the embodiments of the present application are entirely or partially generated. The computer may be a general-purpose computer, a special-purpose computer, a computer network, or other programmable apparatus. The computer instructions may be stored in a computer-readable storage medium or transmitted from one computer-readable storage medium to another computer-readable storage medium. For example, the computer instructions may be transmitted from one website, computer, server, or data center to another website, computer, server, or data center in wired manner (e.g., coaxial cable, optical fiber, digital subscriber line (DSL)) or in wireless manner (e.g., infrared, wireless, microwave, etc.). The computer-readable storage medium may be any available medium that can be accessed by a computer or a data storage device, such as a server or data center, integrating one or more available media. The available medium may be a magnetic medium (e.g., floppy disk, hard disk, magnetic tape), an optical medium (e.g., digital video disc (DVD)), or a semiconductor medium (e.g., solid state disk (SSD)), etc.

The various modules/units included in various apparatuses or products described in the above embodiments may be software modules/units, hardware modules/units, or partly software modules/units and partly hardware modules/units. For example, for apparatuses or products applied to or integrated into a chip, each module/unit included may be implemented in hardware such as circuits, or at least some modules/units may be implemented in software programs executing on a processor integrated into the chip, and the remaining (if any) modules/units may be implemented in hardware such as circuits; for apparatuses or products applied to or integrated into a chip module, each module/unit included may be implemented in hardware such as circuits, and different modules/units may be located in the same component (e.g., chip, circuit module, etc.) or different components of the chip module, or at least some modules/units may be implemented in software programs executing on a processor integrated into the chip module, and the remaining (if any) modules/units may be implemented in hardware such as circuits; for apparatuses or products applied to or integrated into a terminal device, each module/unit included may be implemented in hardware such as circuits, different modules/units may be located in the same component (e.g., chip, circuit module, etc.) or different components of the terminal device, or at least some modules/units may be implemented by software programs executing on a processor integrated into the terminal device, and the remaining (if any) modules/units may be implemented in hardware such as circuits.

The specific implementations described above provide further detailed explanation regarding the objectives, technical solutions, and beneficial effects of the embodiments of the present application. It should be understood that such description is merely illustrative of specific implementations of the embodiments of the present application and are not intended to limit the protection scope of the embodiments of the present application. Any modifications, equivalent replacements, or improvements made based on the technical solutions of the embodiments of the present application shall fall within the protection scope of the embodiments of the present application.

## Claims

1. A measurement method, **characterized in that**, the method comprises:
performing global navigation satellite system GNSS measurements based on a GNSS measurement starting position in response to an expiration of a first validity duration and a determination that a terminal device is capable of continuing uplink transmission, the first validity duration representing a validity duration of first GNSS location information of the terminal device, and the GNSS measurements being used to determine second GNSS location information of the terminal device.

2. The method of claim 1, **characterized in that**, a time interval between an ending position of the first validity duration and the GNSS measurement starting position is greater than a duration during which the terminal device is capable of continuing uplink transmission.

3. The method of claim 1, **characterized in that**, the GNSS measurement starting position is determined based on an ending position of the first validity duration;
the ending position of the first validity duration is before the GNSS measurement starting position.

4. The method of claim 3, **characterized in that**, the GNSS measurement starting position being determined based on the ending position of the first validity duration, comprises:
the GNSS measurement starting position being determined based on the ending position of the first validity duration and a first delay value, the first delay value representing a time interval between the ending position of the first validity duration and the GNSS measurement starting position; or
the time interval between the ending position of the first validity duration and the GNSS measurement starting position being the first delay value.

5. The method of claim 4, **characterized in that**, the first delay value is associated with a value of a duration during which the terminal device is capable of continuing uplink transmission.

6. The method of claim 4 or 5, **characterized in that**, different values of a duration during which a terminal device is capable of continuing uplink transmission are associated with the same first delay value, or associated with first delay values that are the same; or
different values of a duration during which a terminal device is capable of continuing uplink transmission are associated with different first delay values.

7. The method of claim 4, **characterized in that**, the first delay value is associated with a remaining duration value;
wherein the remaining duration value represents a value of a remaining duration of an uplink timing alignment timer at the end of the first validity duration, wherein the uplink timing alignment timer is associated with a timing advance group TAG.

8. The method of claim 7, **characterized in that**, different remaining duration values are associated with the same first delay value, or associated with first delay values that are the same; or
different remaining duration values are associated with different first delay values.

9. The method of claim 1, **characterized in that**, the GNSS measurement starting position is determined based on an ending position of a duration during which the terminal device is capable of continuing uplink transmission;
the ending position of the duration during which the terminal device is capable of continuing uplink transmission is before the GNSS measurement starting position, and a starting position of the duration during which the terminal device is capable of continuing uplink transmission is an ending position of the first validity duration.

10. The method of claim 9, **characterized in that**, the GNSS measurement starting position being determined based on the ending position of the duration during which the terminal device is capable of continuing uplink transmission, comprises:
the GNSS measurement starting position being determined based on the ending position of the duration during which the terminal device is capable of continuing uplink transmission and a second delay value, wherein the second delay value represents a time interval between the ending position of the duration during which the terminal device is capable of continuing uplink transmission and the GNSS measurement starting position; or
the time interval between the ending position of the duration during which the terminal device is capable of continuing uplink transmission and the GNSS measurement starting position is the second delay value.

11. The method of claim 10, **characterized in that**, the second delay value is associated with a value of the duration during which the terminal device is capable of continuing uplink transmission.

12. The method of claim 10 or 11, **characterized in that**, different values of a duration during which a terminal device is capable of continuing uplink transmission are associated with the same second delay value, or associated with second delay values that are the same; or
different values of a duration during which a terminal device is capable of continuing uplink transmission are associated with different second delay values.

13. The method of claim 1, **characterized in that**, the GNSS measurement starting position is determined based on a timeout position of an uplink timing alignment timer, wherein the uplink timing alignment timer is associated with a TAG;
the timeout position of the uplink timing alignment timer is before the GNSS measurement starting position, and the timeout position of the uplink timing alignment timer is after an ending position of the first validity duration.

14. The method of claim 13, **characterized in that**, the GNSS measurement starting position being determined based on the timeout position of the uplink timing alignment timer, comprises:
the GNSS measurement starting position being determined based on the timeout position of the uplink timing alignment timer and a third delay value, wherein the third delay value represents a time interval between the timeout position of the uplink timing alignment timer and the GNSS measurement starting position; or
the time interval between the timeout position of the uplink timing alignment timer and the GNSS measurement starting position is the third delay value.

15. The method of claim 14, **characterized in that**, the third delay value is associated with a remaining duration value;
the remaining duration value represents a value of a remaining duration of the uplink timing alignment timer at the end of the first validity duration.

16. The method of claim 15, **characterized in that**, different remaining duration values are associated with the same third delay value, or associated with third delay values that are the same; or
different remaining duration values are associated with different third delay values.

17. The method of any one of claims 1-16, **characterized in that**, the GNSS measurements are autonomously performed by the terminal device.

18. A communication method, **characterized in that**, the method comprises:
sending first information, the first information being used to configure a global navigation satellite system GNSS measurement starting position, the GNSS measurement starting position being used for performing GNSS measurements in response to an expiration of a first validity duration and a determination that a terminal device is capable of continuing uplink transmission, the first validity duration representing a validity duration of first GNSS location information of the terminal device, and the GNSS measurements being used for determining second GNSS location information of the terminal device.

19. The method of claim 18, **characterized in that**, a time interval between an ending position of the first validity duration and the GNSS measurement starting position is greater than a duration during which the terminal device is capable of continuing uplink transmission.

20. The method of claim 18, **characterized in that**, the first information includes a first delay value, wherein the first delay value represents a time interval between an ending position of the first validity duration and the GNSS measurement starting position;
wherein the ending position of the first validity duration is before the GNSS measurement starting position.

21. The method of claim 20, **characterized in that**, the first delay value is associated with a value of a duration during which the terminal device is capable of continuing uplink transmission.

22. The method of claim 20 or 21, **characterized in that**, different values of a duration during which a terminal device is capable of continuing uplink transmission are associated with the same first delay value, or associated with first delay values that are the same; or
different values of a duration during which a terminal device is capable of continuing uplink transmission are associated with different first delay values.

23. The method of claim 20, **characterized in that**, the first delay value is associated with a remaining duration value;
wherein the remaining duration value represents a value of a remaining duration of an uplink timing alignment timer at the end of the first validity duration, wherein the uplink timing alignment timer is associated with a timing advance group TAG.

24. The method of claim 23, **characterized in that**, different remaining duration values are associated with the same first delay value, or associated with first delay values that are the same; or
different remaining duration values are associated with different first delay values.

25. The method of claim 18, **characterized in that**, the first information includes a second delay value, the second delay value represents a time interval between an ending position of a duration during which the terminal device is capable of continuing uplink transmission and the GNSS measurement starting position;
the ending position of the duration during which the terminal device is capable of continuing uplink transmission is before the GNSS measurement starting position, and a starting position of the duration during which the terminal device is capable of continuing uplink transmission is an ending position of the first validity duration.

26. The method of claim 25, **characterized in that**, the second delay value is associated with a value of the duration during which the terminal device is capable of continuing uplink transmission.

27. The method of claim 25 or 26, **characterized in that**, different values of a duration during which a terminal device is capable of continuing uplink transmission are associated with the same second delay value, or associated with second delay values that are the same; or
different values of a duration during which a terminal device is capable of continuing uplink transmission are associated with different second delay values.

28. The method of claim 18, **characterized in that**, the first information includes a third delay value, the third delay value represents a time interval between a timeout position of an uplink timing alignment timer and the GNSS measurement starting position;
the timeout position of the uplink timing alignment timer is before the GNSS measurement starting position, and the timeout position of the uplink timing alignment timer is after an ending position of the first validity duration.

29. The method of claim 28, **characterized in that**, the third delay value is associated with a remaining duration value;
the remaining duration value represents a value of a remaining duration of the uplink timing alignment timer at the end of the first validity duration.

30. The method of claim 29, **characterized in that**, different remaining duration values are associated with the same third delay value, or associated with third delay values that are the same; or
different remaining duration values are associated with different third delay values.

31. A measurement apparatus, **characterized in that**, the apparatus comprises:
a measurement unit for performing global navigation satellite system GNSS measurements based on a GNSS measurement starting position in response to an expiration of a first validity duration and a determination that a terminal device is capable of continuing uplink transmission, the first validity duration representing a validity duration of first GNSS location information of the terminal device, and the GNSS measurements being used to determine second GNSS location information of the terminal device.

32. The apparatus of claim 31, **characterized in that**, a time interval between an ending position of the first validity duration and the GNSS measurement starting position is greater than a duration during which the terminal device is capable of continuing uplink transmission.

33. The apparatus of claim 31, **characterized in that**, the GNSS measurement starting position is determined based on an ending position of the first validity duration;
the ending position of the first validity duration is before the GNSS measurement starting position.

34. The apparatus of claim 33, **characterized in that**, the GNSS measurement starting position being determined based on the ending position of the first validity duration, comprises:
the GNSS measurement starting position being determined based on the ending position of the first validity duration and a first delay value, the first delay value representing a time interval between the ending position of the first validity duration and the GNSS measurement starting position; or
the time interval between the ending position of the first validity duration and the GNSS measurement starting position being the first delay value.

35. The apparatus of claim 34, **characterized in that**, the first delay value is associated with a value of a duration during which the terminal device is capable of continuing uplink transmission.

36. The apparatus of claim 34 or 35, **characterized in that**, different values of a duration during which a terminal device is capable of continuing uplink transmission are associated with the same first delay value, or associated with first delay values that are the same; or
different values of a duration during which a terminal device is capable of continuing uplink transmission are associated with different first delay values.

37. The apparatus of claim 34, **characterized in that**, the first delay value is associated with a remaining duration value;
wherein the remaining duration value represents a value of a remaining duration of an uplink timing alignment timer at the end of the first validity duration, wherein the uplink timing alignment timer is associated with a timing advance group TAG.

38. The apparatus of claim 37, **characterized in that**, different remaining duration values are associated with the same first delay value, or associated with first delay values that are the same; or
different remaining duration values are associated with different first delay values.

39. The apparatus of claim 31, **characterized in that**, the GNSS measurement starting position is determined based on an ending position of a duration during which the terminal device is capable of continuing uplink transmission;
the ending position of the duration during which the terminal device is capable of continuing uplink transmission is before the GNSS measurement starting position, and a starting position of the duration during which the terminal device is capable of continuing uplink transmission is an ending position of the first validity duration.

40. The apparatus of claim 39, **characterized in that**, the GNSS measurement starting position being determined based on the ending position of the duration during which the terminal device is capable of continuing uplink transmission comprises:
the GNSS measurement starting position being determined based on the ending position of the duration during which the terminal device is capable of continuing uplink transmission and a second delay value, wherein the second delay value represents a time interval between the ending position of the duration during which the terminal device is capable of continuing uplink transmission and the GNSS measurement starting position; or
the time interval between the ending position of the duration during which the terminal device is capable of continuing uplink transmission and the GNSS measurement starting position is the second delay value.

41. The apparatus of claim 40, **characterized in that**, the second delay value is associated with a value of the duration during which the terminal device is capable of continuing uplink transmission.

42. The apparatus of claim 40 or 41, **characterized in that**, different values of a duration during which a terminal device is capable of continuing uplink transmission are associated with the same second delay value, or associated with second delay values that are the same; or
different values of a duration during which a terminal device is capable of continuing uplink transmission are associated with different second delay values.

43. The apparatus of claim 31, **characterized in that**, the GNSS measurement starting position is determined based on a timeout position of an uplink timing alignment timer, wherein the uplink timing alignment timer is associated with a TAG;
the timeout position of the uplink timing alignment timer is before the GNSS measurement starting position, and the timeout position of the uplink timing alignment timer is after an ending position of the first validity duration.

44. The apparatus of claim 43, **characterized in that**, the GNSS measurement starting position being determined based on the timeout position of the uplink timing alignment timer, comprises:
the GNSS measurement starting position being determined based on the timeout position of the uplink timing alignment timer and a third delay value, wherein the third delay value represents a time interval between the timeout position of the uplink timing alignment timer and the GNSS measurement starting position; or
the time interval between the timeout position of the uplink timing alignment timer and the GNSS measurement starting position is the third delay value.

45. The apparatus of claim 44, **characterized in that**, the third delay value is associated with a remaining duration value;
the remaining duration value represents a value of a remaining duration of the uplink timing alignment timer at the end of the first validity duration.

46. The apparatus of claim 45, **characterized in that** different remaining duration values are associated with the same third delay value, or associated with third delay values that are the same; or
different remaining duration values are associated with different third delay values.

47. The apparatus of any one of claims 31-46, **characterized in that**, the GNSS measurements are autonomously performed by the terminal device.

48. A communication apparatus, **characterized in that**, the apparatus comprises:
a sending unit for sending first information, the first information being used to configure a global navigation satellite system GNSS measurement starting position, the GNSS measurement starting position being used for performing GNSS measurements in response to an expiration of a first validity duration and a determination that a terminal device is capable of continuing uplink transmission, the first validity duration representing a validity duration of first GNSS location information of the terminal device, and the GNSS measurements being used for determining second GNSS location information of the terminal device.

49. The apparatus of claim 48, **characterized in that**, a time interval between an ending position of the first validity duration and the GNSS measurement starting position is greater than a duration during which the terminal device is capable of continuing uplink transmission.

50. The apparatus of claim 48, **characterized in that**, the first information includes a first delay value, the first delay value represents a time interval between an ending position of the first validity duration and the GNSS measurement starting position;
wherein the ending position of the first validity duration is before the GNSS measurement starting position.

51. The apparatus of claim 50, **characterized in that**, the first delay value is associated with a value of a duration during which the terminal device is capable of continuing uplink transmission.

52. The apparatus of claim 50 or 51, **characterized in that**, different values of a duration during which a terminal device is capable of continuing uplink transmission are associated with the same first delay value, or associated with first delay values that are the same; or
different values of a duration during which a terminal device is capable of continuing uplink transmission are associated with different first delay values.

53. The apparatus of claim 50, **characterized in that**, the first delay value is associated with a remaining duration value;
wherein the remaining duration value represents a value of a remaining duration of an uplink timing alignment timer at the end of the first validity duration, wherein the uplink timing alignment timer is associated with a timing advance group TAG.

54. The apparatus of claim 53, **characterized in that**, different remaining duration values are associated with the same first delay value, or associated with first delay values that are the same; or
different remaining duration values are associated with different first delay values.

55. The apparatus of claim 48, **characterized in that**, the first information includes a second delay value, the second delay value represents a time interval between an ending position of a duration during which the terminal device is capable of continuing uplink transmission and the GNSS measurement starting position;
the ending position of the duration during which the terminal device is capable of continuing uplink transmission is before the GNSS measurement starting position, and a starting position of the duration during which the terminal device is capable of continuing uplink transmission is an ending position of the first validity duration.

56. The apparatus of claim 55, **characterized in that**, the second delay value is associated with a value of the duration during which the terminal device is capable of continuing uplink transmission.

57. The apparatus of claim 55 or 56, **characterized in that**, different values of a duration during which a terminal device is capable of continuing uplink transmission are associated with the same second delay value, or associated with second delay values that are the same; or
different values of a duration during which a terminal device is capable of continuing uplink transmission are associated with different second delay values.

58. The apparatus of claim 48, **characterized in that**, the first information includes a third delay value, the third delay value represents a time interval between a timeout position of an uplink timing alignment timer and the GNSS measurement starting position;
the timeout position of the uplink timing alignment timer is before the GNSS measurement starting position, and the timeout position of the uplink timing alignment timer is after an ending position of the first validity duration.

59. The apparatus of claim 58, **characterized in that**, the third delay value is associated with a remaining duration value;
the remaining duration value represents a value of a remaining duration of the uplink timing alignment timer at the end of the first validity duration.

60. The apparatus of claim 59, **characterized in that**, different remaining duration values are associated with the same third delay value, or associated with third delay values that are the same; or
different remaining duration values are associated with different third delay values.

61. A terminal device, comprising: a processor, a memory, and computer programs or instructions stored on the memory, **characterized in that**, the processor executes the computer programs or instructions to implement the steps of the method according to any one of claims 1 to 17.

62. A network device, comprising: a processor, a memory, and computer programs or instructions stored on the memory, **characterized in that**, the processor executes the computer programs or instructions to implement the steps of the method according to any one of claims 18 to 30.

63. A chip, comprising a processor and a communication interface, **characterized in that**, the processor executes the steps of the method of any one of claims 1-17 and 18-30.

64. A computer-readable storage medium, **characterized in that**, the computer-readable storage medium stores computer programs or instructions which, when executed, perform the steps of the method of any one of claims 1-17 or 18-30.
